(19) **Europäisches Patentamt / European Patent Office / Office européen des brevets**

(11) **EP 3 538 578 B1**

(12) **EUROPÄISCHE PATENTSCHRIFT**

(45) Veröffentlichungstag und Bekanntmachung des Hinweises auf die Patenterteilung:
**05.03.2025   Patentblatt 2025/10**

(21) Anmeldenummer: **17794991.4**

(22) Anmeldetag: **13.11.2017**

(51) Internationale Patentklassifikation (IPC):
*C08G 18/48* (2006.01)    *B29C 44/34* (2006.01)
*C08L 75/08* (2006.01)    *C08G 18/12* (2006.01)
*C08J 3/20* (2006.01)    *B29B 9/06* (2006.01)
*B29B 9/02* (2006.01)    *C08J 9/16* (2006.01)
*C08J 9/12* (2006.01)    *C08G 18/76* (2006.01)
*C08G 18/66* (2006.01)    *B29B 7/00* (2006.01)
*B29B 9/16* (2006.01)    *B29C 44/44* (2006.01)
*B29C 48/05* (2019.01)    *B29C 48/345* (2019.01)
*B29C 48/92* (2019.01)    *B29K 75/00* (2006.01)
*B29L 31/00* (2006.01)    *C08J 9/18* (2006.01)

(52) Gemeinsame Patentklassifikation (CPC):
(C-Sets verfügbar)
**C08G 18/4854; B29B 7/007; B29B 7/46;
B29B 7/90; B29B 9/065; B29B 9/14; B29B 9/16;
B29C 44/3461; B29C 48/05; B29C 48/345;
B29C 48/37; B29C 48/92; C08G 18/12;
C08G 18/6674; C08G 18/7657;**          (Forts.)

(86) Internationale Anmeldenummer:
**PCT/EP2017/079049**

(87) Internationale Veröffentlichungsnummer:
**WO 2018/087362 (17.05.2018 Gazette 2018/20)**

(54) **EXPANDIERTE THERMOPLASTISCHE POLYURETHANPARTIKEL, VERFAHREN ZU DEREN HERSTELLUNG SOWIE VERFAHREN ZUR HERSTELLUNG EINES FORMTEILS**

EXPANDED THERMOPLASTIC POLYURETHANE PARTICLES, METHOD FOR THEIR MANUFACTURE AND METHOD FOR PRODUCING A MOULDED PART

PARTICULE POLYURÉTHANE THERMOPLASTIQUE EXPANSÉE, PROCÉDÉ DE FABRICATION AINSI QUE PROCÉDÉ DE FABRICATION D'UNE PIÈCE MOULÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **14.11.2016   EP 16198709**

(43) Veröffentlichungstag der Anmeldung:
**18.09.2019   Patentblatt 2019/38**

(73) Patentinhaber: **BASF SE**
**67056 Ludwigshafen am Rhein (DE)**

(72) Erfinder:
• **GUTMANN, Peter**
**67056 Ludwigshafen (DE)**
• **PARK, Hye Jin**
**49448 Lemfoerde (DE)**
• **POESELT, Elmar**
**49448 Lemfoerde (DE)**
• **HOENEMANN, Lutz-Peter**
**49448 Lemfoerde (DE)**
• **KEPPELER, Uwe**
**67056 Ludwigshafen (DE)**

(74) Vertreter: **BASF IP Association**
**BASF SE**
**GBI - Z078**
**67056 Ludwigshafen (DE)**

(56) Entgegenhaltungen:
**EP-A1- 1 927 605      WO-A1-2007/118827**
**WO-A1-2013/153190      WO-A1-2015/052265**

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)
**C08J 9/122; C08J 9/18; C08J 9/232; C08L 75/08;**
**F26B 5/08;** B29C 44/3426; B29C 44/445;

B29C 48/0022; B29C 48/04; B29K 2075/00;
B29L 2031/3005; B29L 2031/3094; B29L 2031/504;
B29L 2031/5209; B29L 2031/7324; C08G 2110/00;
C08G 2110/0058; C08G 2350/00; C08G 2380/00;
C08J 2201/03; C08J 2203/06; C08J 2300/22;
C08J 2375/04; F26B 2200/08

C-Sets
**C08G 18/12, C08G 18/7657;**
**C08L 75/08, C08K 3/346, C08L 75/04**

## Beschreibung

Die Erfindung betrifft ein expandiertes thermoplastisches Polyurethan, aufgebaut aus Isocyanat, gegenüber dem Isocyanat reaktiver Verbindung mit einem Molekulargewicht zwischen 500 und 10000 g/mol und Kettenverlängerer, wobei zusätzlich übliche Zusatzstoffe enthalten sein können. Die Erfindung betrifft weiterhin ein Verfahren zur Herstellung des expandierten thermoplastischen Polyurethans und ein Verfahren zur Herstellung eines Formteils aus einem solchen expandierten thermoplastischen Polyurethan. Die Erfindung ist dargelegt im angefügten Anspruchssatz.

Expandiertes thermoplastisches Polyurethan kann aufgrund der elastischen und tribologischen Eigenschaften in unterschiedlichsten Anwendungen eingesetzt werden. So werden expandierte Granulate aus thermoplastischen Polyurethanen zum Beispiel für wiederverwendbare Gymnastikmatten, Körperprotektoren, Auskleidungselemente im Automobilbau, Schall- und Schwingungsdämpfer, Verpackungen oder Schuhsohlen eingesetzt. In allen diesen Bereichen sind eine hohe Elastizität und hohe Druckeigenschaften von entscheidender Bedeutung.

Die Herstellung entsprechender Bauteile erfolgt üblicherweise aus expandierten Partikeln, die in ein Formwerkzeug eingefüllt und anschließend miteinander verbunden werden. Hierzu wird üblicherweise Wasserdampf durch die Form geleitet, wodurch die einzelnen expandierten Partikel an der Oberfläche anschmelzen und sich miteinander zum Formteil verbinden.

Der chemische Aufbau von thermoplastischen Polyurethanen und expandierten thermoplastischen Polyurethanen ist im Wesentlichen gleich. Bei expandierten thermoplastischen Polyurethanen wird jedoch während der Herstellung ein Treibmittel zugegeben, welches das Polyurethan bei der Herstellung aufschäumt. Dies führt im Nachhinein auch zu unterschiedlichen Verfahren für die Weiterverarbeitung zur Formteilherstellung.

Nicht expandierte thermoplastische Polyurethane, die aus einem Isocyanat, einer gegenüber dem Isocyanat reaktiven Verbindung sowie einem Kettenverlängerer aufgebaut sind, sind zum Beispiel aus WO-A 2007/118827, US-A 2012/0083187, US-A 2010/0152405, DE-A 10 2006 021 734 oder US-A 2009/0104449 bekannt. Hierbei geht insbesondere aus WO-A 2007/118827 hervor, dass durch eine geeignete Wahl des Kettenverlängerers der Hartphasenanteil eingestellt werden kann. Hierzu werden in der WO-A 2007/1188727 zwei unterschiedliche Kettenverlängerer in Mischung eingesetzt.

Unterschiedliche expandierte thermoplastische Polyurethane, die ebenfalls aus einem Isocyanat, einer gegenüber dem Isocyanat reaktiven Verbindung und einem Kettenverlängerer aufge-B 16/70489PCEP baut sind, sind in WO-A 2007/082838, WO-A 2013/153153, WO-A 2013/153190, WO-A 2015/052265 oder WO-A 2015/055811 beschrieben.

Unabhängig davon, ob das thermoplastische Polyurethan als massives Polymer oder als expandiertes Polymer hergestellt wird, wird als Kettenverlängerer üblicherweise 1,4-Butandiol eingesetzt. Dies hat jedoch insbesondere bei expandierten thermoplastischen Polyurethanen den Nachteil, dass bei einem höheren Hartphasenanteil, der zu einem höheren Speichermodul bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) und damit einer höheren Festigkeit des Materials führt, die Schmelztemperatur ebenfalls ansteigt. Dies ist jedoch insbesondere für die weitere Verarbeitung zu Formteilen aus Partikeln aus dem thermoplastischen Polyurethan nicht gewünscht, da für die Formteilherstellung die Oberfläche der einzelnen Partikel angeschmolzen werden muss, um diese zu Formteilen miteinander zu verbinden.

Aufgabe der vorliegenden Erfindung war es daher, expandierte thermoplastische Polyurethanpartikel bereitzustellen, die einen höheren Hartphasenanteil und damit einen größeren Speichermodul bei Raumtemperatur (gemessen an einer 2 mm, für 20 h bei 100 °C getemperten Spritzgussplatte in Anlehnung an DIN EN ISO 6721-2:2011, mit einer Frequenz von 1 Hz und einer Heizrate von 20 K/min von -80 °C bis 200 °C) aufweisen, ohne dass die Schmelztemperatur des thermoplastischen Polyurethans gegenüber den bekannten thermoplastischen Polyurethanen deutlich ansteigt, um eine Weiterverarbeitung zu ermöglichen.

Diese Aufgabe wird gelöst durch expandierte thermoplastische Polyurethanpartikel, aufgebaut aus Isocyanat, Polyol als gegenüber dem Isocyanat reaktiver Verbindung mit einem zahlenmittleren Molekulargewicht zwischen 500 und 10000 g/mol und Kettenverlängerer, wobei zusätzlich übliche Zusatzstoffe enthalten sein können, das thermoplastische Polyurethan einen Hartphasenanteil im Bereich von 0,1 bis 0,95 aufweist und der Hartphasenanteil durch

$$Hartphasenanteil = \frac{\sum_{x=1}^{k}\left(\left(\frac{m_{KVx}}{M_{KVx}}\right) \cdot M_{Iso} + m_{KVx}\right)}{m_{ges}}$$

mit

- $M_{KVx}$: molare Masse des Kettenverlängerers x in g/mol,

- $m_{KVx}$: Masse des Kettenverlängerers x in g
- $M_{Ixo}$: molare Masse des verwendeten Isocyanates in g/mol
- $m_{ges}$: Gesamtmasse aller Ausgangsstoffe ohne Zusatzstoffe
- k: Anzahl der Kettenverlängerer

definiert ist, und der Kettenverlängerer ein Diol mit 5 bis 10 Kohlenstoffatomen, eine Mischung aus mindestens zwei unterschiedlichen Diolen, wobei mindestens ein Diol 4 bis 10 Kohlenstoffatome und alle weiteren Diole 2 bis 10 Kohlenstoffatome aufweisen, eine Mischung aus mindestens einem Diol mit 4 bis 10 Kohlenstoffatomen und mindestens einem Diamin oder eine Mischung aus mindestens einem Diol mit 4 bis 10 Kohlenstoffatomen und einem Aminoalkohol ist.

Überraschenderweise hat sich gezeigt, dass bei Einsatz eines Diols mit 5 bis 10 Kohlenstoffatomen als Kettenverlängerer oder einer Mischung aus mindestens zwei Diolen, wobei mindestens ein Diol 4 bis 10 Kohlenstoffatome und alle weiteren Diole zwei bis 10 Kohlenstoffatome aufweisen, eine Mischung aus mindestens einem Diol mit 4 bis 10 Kohlenstoffatomen und mindestens einem Diamin oder einer Mischung aus mindestens einem Diol mit 4 bis 10 Kohlenstoffatomen und einem Aminoalkohol die Eigenschaften bis zu einer Temperatur von 40°C im Vergleich zur Verwendung von 1,4-Butandiol keine signifikanten Änderungen zeigen, sich jedoch der Schmelzpunkt und damit die Verarbeitungstemperatur des expandierten thermoplastischen Polyurethans verringert und somit auch eine Weiterverarbeitung von expandierten Partikeln aus einem thermoplastischen Polyurethan mit einem höheren Hartphasenanteil und damit einem höheren Speichermodul bei Raumtemperatur (gemessen an einer 2 mm, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) möglich ist.

Als "Diol" im Rahmen der vorliegenden Erfindung werden verzweigte oder unverzweigte aliphatische, araliphatische, cycloaliphatische oder aromatische Kohlenwasserstoffe mit zwei Hydroxylgruppen bezeichnet. Die Verbindungen können zusätzlich weitere vom Hydroxyl verschiedene funktionelle Gruppen und/oder Heteroatome enthalten. Bevorzugt sind jedoch Diole ohne weitere funktionelle Gruppen und ohne Heteroatome.

Das expandierte thermoplastische Polyurethan kann jedes beliebige, dem Fachmann bekannte thermoplastische Polyurethan sein. Thermoplastische Polyurethane und Verfahren zu deren Herstellung sind bereits vielfach beschrieben, beispielsweise in Gerhard W. Becker und Dietrich Braun, Kunststoffhandbuch, Band 7, "Polyurethane", Carl Hanser Verlag, München, Wien, 1993.

Nachfolgend wird als Molekulargewicht für das Polyol das zahlenmittlere Molekulargewicht angegeben.

Das thermoplastische Polyurethan wird erfindungsgemäß durch Umsetzung einer Mischung von Isocyanaten mit gegenüber Isocyanaten reaktiven Verbindungen mit einem Molekulargewicht zwischen 500 und 10000 g/mol sowie Kettenverlängerer hergestellt. Zusätzlich können übliche Zusatzstoffe, beispielsweise Kettenregler, Katalysatoren, Füllstoffe, Hilfsstoffe oder sonstige Additive zugesetzt werden.

Für die Herstellung des erfindungsgemäßen expandierten thermoplastischen Polyurethans wird auf jeden Fall eine Mischung aus Isocyanat, gegenüber dem Isocyanat reaktiver Verbindung und Kettenverlängerer benötigt. Der weitere Zusatz der sonstigen Zusatzstoffe ist optional und kann einzeln oder in allen möglichen Variationen erfolgen.

Für die Herstellung des thermoplastischen Polyurethans geeignete organische Isocyanate sind zum Beispiel aliphatische, cycloaliphatische, araliphatische und/oder aromatische Isocyanate. Besonders bevorzugt werden aromatische, aliphatische und/oder cycloaliphatische Diisocyanate verwendet. Beispiele für geeignete Diisocyanate sind Trimethylendiisocyanat, Tetramethylendiisocyanat, Pentamethylendiisocyanat, Hexamethylendiisocyanat, Heptamethylendiisocyanat, Oktamethylendiisocyanat; 2-Methylpentamethylendiisocyanat-1,5; 2-Ethylbutylendiisocyanat-1,4; Butylendiisocyanat-1,4; 1-Isocyanato-3,3,5-trimethyl-5-isocyanatomethylcyclohexan; 1,4-Bis(isocyanatomethyl)cyclohexan; 1,4-Cyclohexandiisocyanat; 1-Methyl-2,4-cyclohexandiisocyanat;1-Methyl-2,6-cyclohexandiisocyanat; 2,2'-Dicyclohexylmethandiisocyanat; 2,4'-Dicyclohexylmethandiisocyanat; 4,4'-Dicyclohexylmethandiisocyanat; 2,2'-Diphenylmethandiisocyanat; 2,4'-Diphenylmethandiisocyanat; 4,4'-Diphenylmethandiisocyanat; 1,5-Naphthylendiisocyanat; 2,4-Toluylendiisocyanat; 2,6-Toluylendiisocyanat; Diphenylmethandiisocyanat; 3,3'-Dimethyldiphenyl-diisocyanat; 1,2-Diphenylethandiisocyanat und Phenylendiisocyanat sowie jede beliebige Mischung daraus.

Die für die Herstellung des thermoplastischen Polyurethans eingesetzte mit dem Isocyanat reaktive Verbindung ist vorzugsweise ausgewählt aus Polyetherolen, Polyesterolen, Polybutadienolen und Polycarbonatolen und deren Mischungen sowie Blockcopolymeren daraus. Die Polyetherole, Polyesterole, Polybutadienole und Polycarbonatole werden üblicherweise auch unter dem Begriff "Polyole" zusammengefasst.

Bevorzugt wird zur Herstellung des thermoplastischen Polyurethans ein Polyetherol eingesetzt. Besonders bevorzugte mit dem Isocyanat reaktive Verbindungen sind Polytetrahydrofurandiol, Polytrimethylenoxiddiol und Polypropylenoxiddiol. Neben Polyetherolen sind auch Polyesterole oder Polycarbonatole zur Herstellung des thermoplastischen Polyurethans bevorzugt. Besonders bevorzugt als Polyesterole sind Polycaprolactondiole.

Neben auf fossilen Ausgangsstoffen basierten Polyolen können auch Polyole eingesetzt werden, die aus Ausgangsstoffen, die aus nachwachsenden Rohstoffen hergestellt werden, produziert werden.

Die zur Herstellung des thermoplastischen Polyurethans eingesetzten Polyole haben vorzugsweise ein Molekulargewicht im Bereich von 500 bis 8000 g/mol, mehr bevorzugt von 600 bis 6000 g/mol und insbesondere von 800 bis 4000 g/mol. Weiterhin ist es bevorzugt, wenn die Polyole eine mittlere Funktionalität von 1,3 bis 2,3, weiter bevorzugt von 1,9 bis 2,2 und insbesondere von 2 aufweisen. Bevorzugt sind daher Polyetherdiole, Polyesterdiole, Polybutadiendiole und Polycarbonatdiole. Wenn das Polyol ein Polyetheralkohol, insbesondere Polytetrahydrofurandiol, Polytrimethylenoxiddiol oder Polypropylenoxiddiol ist, liegt das Molekulargewicht bevorzugt zwischen 600 und 2500 g/mol.

Erfindungsgemäß werden zur Herstellung des expandierten thermoplastischen Polyurethans Kettenverlängerer eingesetzt, wobei die Menge an Kettenverlängerer so gewählt wird, dass das hergestellte thermoplastische Polyurethan einen Hartphasenanteil im Bereich von 0,1 bis 0,95 aufweist und durch

$$Hartphasenanteil = \frac{\sum_{x=1}^{k}\left(\left(\frac{m_{KVx}}{M_{KVx}}\right) \cdot M_{Iso} + m_{KVx}\right)}{m_{ges}}$$

mit

- $M_{KVx}$: molare Masse des Kettenverlängerers x in g/mol,
- $m_{KVx}$: Masse des Kettenverlängerers x in g
- $M_{Ixo}$: molare Masse des verwendeten Isocyanates in g/mol
- $m_{ges}$: Gesamtmasse aller Ausgangsstoffe ohne Zusatzstoffe
- k: Anzahl der Kettenverlängerer

definiert ist. Als Kettenverlängerer werden vorzugsweise aliphatische, araliphatische, aromatische und/oder cycloaliphatische Verbindungen eingesetzt, die vorzugsweise ein Molekulargewicht von 50 bis 500 g/mol haben. Die Kettenverlängerer können einzeln oder in Mischung eingesetzt werden. Wenn nur ein Kettenverlängerer eingesetzt wird, so ist dieser erfindungsgemäß ein Diol mit 5 bis 10 Kohlenstoffatomen und vorzugsweise ausgewählt aus der Gruppe bestehend aus 1,5-Pentandiol, 1,6-Hexandiol, 1,7-Heptandiol, 1,8-Oktandiol, 1,9-Nonandiol, 1,10-Dekandiol, 1,4-Cyclohexyldimethanol, 2-Butyl-2-ethylpropandiol, Neopentylglykol, 2,2,4-Trimethyl-1,3-pentandiol, Pinakol, 2-Ethyl-1,3-hexandiol, 1,4-Cyclohexandiol, N-Phenyldiethanolamin.

Wenn eine Mischung aus mindestens zwei unterschiedlichen Kettenverlängerern eingesetzt wird, ist mindestens einer der eingesetzten Kettenverlängerer ein Diol mit 4 bis 10 Kohlenstoffatomen. Alle weiteren eingesetzten Kettenverlängerer können ausgewählt sein aus Diolen mit 2 bis 10 Kohlenstoffatomen, Diaminen oder Aminoalkoholen. Wenn der Kettenverlängerer eine Mischung aus mindestens zwei Diolen ist, so liegt der Anteil des Diols mit 4 bis 10 Kohlenstoffatomen bezogen auf die Gesamtmasse des Kettenverlängerers vorzugsweise im Bereich von 50 bis 99,9 Gew.-%.

Bevorzugt ist das erste Diol, das heißt das Diol mit 4 bis 10 Kohlenstoffatomen ausgewählt aus 1,4-Butandiol und 1,6-Hexandiol.

Bei einer Mischung aus mindestens zwei unterschiedlichen Diolen sind alle weiteren Diole vorzugsweise ausgewählt aus 1,2-Ethylenglykol, 1,2-Propylenglykol, 1,3-Propandiol, 1,4-Butandiol, 1,5-Pentandiol, 1,6-Hexandiol, 1,7-Heptandiol, 1,8-Oktandiol, 1,9-Nonandiol, 1,10-Dekandiol, 1,4-Cyclohexyldimethanol, 2-Butyl-2-ethylpropandiol, Neopentylglykol, 2,2,4-Trimethyl-1,3-pentandiol, Pinakol, 2-Ethyl-1,3-hexandiol, 1,4-Cyclohexandiol, N-Phenyldiethanolamin.

Wenn die Mischung aus mindestens zwei Kettenverlängerern ein Diamin enthält, so ist dieses vorzugsweise ein Diamin mit maximal 17 C-Atomen, besonders bevorzugt ausgewählt aus Ethylendiamin, Isophorondiamin, Methylendiphenyldiamin, 1,4-Diaminobutan, trans-1,4-diaminocyclohexan, Bis(4-amino-2-chloro-3,5-diethylphenyl)methan, 4,4'-Methylenbis(2,6-diethyl-anilin), 4,4'-Methylenbis(2-isopropyl-6-methylanilin), 4,4'-Methylenbis(2,6-diisopropylanilin und 1,6-Diaminohexan

Bei einer Mischung mit einem Aminoalkohol ist dieser vorzugsweise ausgewählt aus Ethanolamin, 4-Aminobutan-1-ol und 6-Aminohexan-1-ol.

Besonders bevorzugt ist der Kettenverlängerer jedoch ein Diol oder eine Mischung aus mindestens zwei unterschiedlichen Diolen. Ganz besonders bevorzugt ist der Kettenverlängerer 1,6-Hexandiol.

Neben den vorstehend genannten Kettenverlängerern können bei einer Mischung aus mehreren Kettenverlängerern auch Kettenverlängerer mit Diol-funktionellen Gruppen eingesetzt werden. Auch ist es möglich, Kettenverlängerer mit Carboxy-funktionellen Gruppen einzusetzen, die bei Reaktion mit einer Isocyanatgruppe Amide unter Abspaltung von $CO_2$ bilden. Derartige Kettenverlängerer mit Carboxy-funktionellen Gruppen können jedoch nur in kleinen Mengen, das heißt Mengen von weniger als 40 Gew.-% bezogen auf die Gesamtmasse an Kettenverlängerer zugegeben werden.

Überraschenderweise hat sich gezeigt, dass durch den Einsatz der entsprechenden Kettenverlängerer eine breite Variation des Hartphasenanteils im expandierten thermoplastischen Polyurethan möglich ist, wobei dabei gleichzeitig eine Verarbeitungstemperatur und Schmelztemperatur erreicht wird, die unterhalb von 160°C liegt, insbesondere unterhalb von 120° C, so dass insbesondere die Verarbeitung zu Formteil aus einem partikulären Schaum, das heißt Verschweißen von einzelnen expandierten Partikeln, möglich ist.

Bevorzugt wird der Anteil an Kettenverlängerern so eingestellt, dass der Hartphasenanteil im Bereich von 0,15 bis 0,5 und insbesondere im Bereich von 0,2 bis 0,45 liegt. Durch einen entsprechenden Hartphasenanteil weist das erhaltene thermoplastische Polyurethan einen ausreichend hohen Speichermodul bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) vorzugsweise im Bereich von 5 bis 100 MPa auf und hat damit eine ausreichende Festigkeit, wobei diese vom Einsatzzweck des expandierten thermoplastischen Polyurethans abhängig ist.

Die Dichte der expandierten thermoplastischen Polyurethanpartikel (bestimmt nach DIN EN ISO 527:2012) liegt dabei im Bereich von 10 bis 500 g/l, bevorzugt im Bereich von 50 bis 350 g/l.

Zusätzlich zum Isocyanat, der mit dem Isocyanat reaktiven Verbindung und dem Kettenverlängerer können auch noch für die Herstellung von thermoplastischen Polyurethanen übliche Zusatzstoffe enthalten sein. Übliche Zusatzstoffe sind zum Beispiel Kettenregler, Katalysatoren, Füllstoffe, Hilfsstoffe oder weitere Additive. Die Zugabe der Zusatzstoffe zum thermoplastischen Polyurethan ist optional und kann einzeln oder in allen möglichen Variationen erfolgen.

Wenn Kettenregler eingesetzt werden, so weisen diese üblicherweise ein Molekulargewicht von 30 bis 500 g/mol auf. Als Kettenregler werden Verbindungen bezeichnet, die gegenüber Isocyanaten nur eine funktionelle Gruppe aufweisen. Beispiele für Kettenregler sind monofunktionelle Alkohole, monofunktionelle Amine, bevorzugt Methylamin und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der Verbindung mit mindestens zwei mit Isocyanatgruppen reaktiven wasserstoffhaltigen Gruppen eingesetzt. Die Kettenregler werden dabei in Ergänzung zu den Kettenverlängerern eingesetzt.

Zur Beschleunigung der Reaktion zwischen den Isocyanatgruppen der Diisocyanate und dem gegenüber Isocyanaten reaktiven Verbindungen, insbesondere Hydroxylgruppen, der Kettenregler und der Kettenverlängerer ist es möglich, einen Katalysator einzusetzen. Vorzugsweise ist der Katalysator ausgewählt aus der Gruppe der tertiären Amine, beispielsweise Triethylamin, Dimethylcyclohexylamin, N-Methylmorpholin, N,N-Dimethylpiperazin, 2-(Dimethylaminoethoxy)-ethanol, Diazabicyclo-(2,2,2)octan und ähnliche Substanzen. Weiter bevorzugt ist der mindestens eine Katalysator aus der Gruppe der organischen Metallverbindungen ausgewählt und ist exemplarisch genannt, Titansäureester, eine Eisenverbindung, beispielsweise Eisen-(III)acetylacetonat, eine Zinnverbindung, beispielsweise Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

Die Katalysatoren können einzeln eingesetzt werden oder in Mischungen von Katalysatoren. Bevorzugt wird als Katalysator eine Mischung von Katalysatoren in Mengen von 0,001 Gew.-% bis 0,1 Gew.-%, bezogen auf die Verbindung mit mindestens zwei mit Isocyanatgruppen reaktiven wasserstoffhaltigen Gruppen, bevorzugt die Polyhydroxylverbindung, eingesetzt.

Als Hilfsstoffe und/oder weitere Additive können zum Beispiel Hydrolyseschutzmittel und/oder Antioxidationsmittel eingesetzt sein. Weitere Additive und Hilfsstoffe können Standardwerken wie beispielsweise im bereits vorstehend genannten Gerhard. W. Becker und Dietrich Braun, Kunststoffhandbuch, Band 7 "Polyurethane", Carl Hanser Verlag, München, Wien, 1993 entnommen werden.

Neben Katalysatoren, aber auch ohne die Verwendung von Katalysatoren können den Isocyanaten und der Verbindung mit mindestens zwei mit Isocynatgruppen reaktiven wasserstoffhaltigen Gruppen zur Herstellung des thermoplastischen Polyurethans auch Hydrolyseschutzmittel, beispielsweise Polymere und niedermolekulare Carbodiimide zugefügt werden.

Weiterhin kann das thermoplastische Polyurethan eine Phosphorverbindung enthalten. Vorzugsweise werden als Phosphorverbindungen Organophosphorverbindungen des trivalenten Phosphors, beispielsweise Phosphite und Phosphonite, verwendet. Beispiele für geeignete Phosphorverbindungen sind Triphenylphosphite, Diphenylalkylphosphit, Phenyldialkylphosphit, Tris-(nonylphenyl)phosphit, Trilaurylposphit, Trioctadecylphosphit, Distearylpentaerythritoldisphosphit, Tris-(2,4-di-tert-butylphenyl)phosphit, Diisopentaerythritoldiphosphit, Di-(2,4-di-tert-butylphenyl)-pentaerythritoldiphosphit, Tristearylsorbitoltriphosphit, Tetrakis-(2,4-di-tert-butylphenyl)-4,4'-diphenylendiphosphonit, Triisodecylphosphit, Diisodecylphenylphosphit und Diphenylisodecylphosphit oder Gemische daraus.

Besonders bevorzugt sind Phosphorverbindungen enthalten, die schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane Phosphorverbindungen geeignet, die besonders schwer hydrolysieren. Bevorzugte schwer hydrolysierbare Phosphorverbindungen sind zum Beispiel Dipolypropylenglykolphenylphosphit, Phenyldiisodecylphosphit, Diphenylmonodecylphosphit, Triisononylphosphit, Tris-(2,4-di-tert-butylphenyl)phosphit, Tetrakis-(2,4-di-tert-butylphenyl)-4,4'-diphenylendisphosphonit und Di-(2,4-di-tert-butylphenyl)-pentaerythritoldiphosphit oder Gemische davon.

Zur Einstellung des Hartphasenanteils und damit sowohl des Speichermoduls bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) als auch der Shore-Härte des thermoplastischen Polyurethans können die Verbindungen mit mindestens zwei mit Isocyanatgruppen reaktiven wasserstoffhaltigen Gruppen und die Kettenverlängerer in relativ breiten molaren Verhältnissen variiert werden. In bevorzugten Ausführungsformen verhält sich das molare Verhältnis der Verbindungen mit mindestens zwei mit Isocyanatgruppen reaktiven wasserstoffhaltigen Gruppen zum insgesamt eingesetzten Kettenverlängerer wie 10:1 bis 1:10, bevorzugt 5:1 bis 1:8, weiter bevorzugt wie 1:1 bis 1:4, wobei die Härte des thermoplastischen Polyurethans mit zunehmendem Gehalt an Kettenverlängerer ansteigt. Auf diese Weise können Shore-Härten von A75 bis D60, besonders bevorzugt von A83 bis A95, insbesondere von A85 bis A90 erreicht werden. Die Shore-Härten werden dabei nach DIN ISO 7619-1:2012 am kompakten, das heißt nicht expandierten, thermoplastischen Polyurethan bestimmt. Hierzu werden Platten eingesetzt, die entweder aus dem Ausgangsmaterial oder aus wieder eingeschmolzenen expandierten thermoplastischen Polyurethanpartikeln oder daraus hergestellten Formteilen hergestellt werden.

Durch die Einstellung des Verhältnisses der gegenüber dem Isocyanat reaktiven Verbindung und dem Kettenverlängerer kann ebenfalls der Speichermodul eingestellt werden. Dieser wird vorzugsweise ebenfalls am kompakten, nicht expandierten thermoplastischen Polyurethan bestimmt. Der Speichermodul des Polyurethans ohne Füllstoffe bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) liegt dabei vorzugsweise im Bereich von 1 bis 300 MPa, mehr bevorzugt im Bereich von 5 bis 200 MPa und insbesondere im Bereich von 10 bis 100 MPa.

Durch die Verwendung des Diols mit 5 bis 10 Kohlenstoffatomen oder der Mischung aus mindestens zwei Diolen, wobei mindestens ein Diol 4 bis 10 Kohlenstoffatome und alle weiteren Diole 2 bis 10 Kohlenstoffatome aufweisen, der Mischung aus mindestens einem Diol mit 4 bis 10 Kohlenstoffatomen und mindestens einem Diamin oder der Mischung aus mindestens einem Diol mit 4 bis 10 Kohlenstoffatomen und einem Aminoalkohol als Kettenverlängerer wird selbst bei hohen Hartphasenanteilen, das heißt bei großen Shore-Härten und hohen Speichermodulen bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) eine Verarbeitungstemperatur erhalten, die deutlich niedriger liegt als bei Verwendung des üblicherweise eingesetzten 1,2-Ethylenglykols oder 1,4-Butandiols als Kettenverlängerer. Insbesondere ist das aus dem thermoplastischen Polyurethan hergestellte expandierte Polyurethan auch bei Temperaturen unterhalb von 160°C noch verarbeitbar.

Die Umsetzung zum thermoplastischen Polyurethan erfolgt vorzugsweise bei üblichen Kennzahlen, wobei die Kennzahl definiert ist durch das Verhältnis der insgesamt bei der Umsetzung eingesetzten Isocyanatgruppen, des aromatischen, aliphatischen und/oder cycloaliphatischen Diisocyanats zu den gegenüber Isocyanaten reaktiven Gruppen, das heißt den aktiven Wasserstoffen der Verbindung mit mindestens zwei mit Isocyanatgruppen reaktiven wasserstoffhaltigen Gruppen und Kettenverlängerer. Bei einer Kennzahl von 100 kommt auf eine Isocyanatgruppe des aromatischen, aliphatischen und/oder cycloaliphatischen Diisocyanats ein aktives Wasserstoffatom, das heißt eine gegenüber Isocyanaten reaktive Funktion der Verbindung mit mindestens zwei mit Isocyanatgruppen reaktiven wasserstoffhaltigen Gruppen und der Kettenverlängerer. Bei Kennzahlen über 100 liegen mehr Isocyanatgruppen als gegenüber Isocyanaten reaktive Gruppen, beispielsweise Hydroxylgruppen, vor.

In besonders bevorzugten Ausführungsformen erfolgt die Umsetzung zum thermoplastischen Polyurethan bei einer Kennzahl zwischen 60 und 120, weiter bevorzugt bei einer Kennzahl zwischen 80 und 110.

Zusätzlich zu den Katalysatoren und Kettenreglern eingesetzte Hilfsstoffe und weitere Additive sind zum Beispiel oberflächenaktive Substanzen, Flammschutzmittel, Oxidationsstabilisatoren, Gleit- und Entformungshilfen, Farbstoffe und Pigmente, gegebenenfalls zusätzlich weitere Stabilisatoren, zum Beispiel gegen Hydrolyse, Licht, Hitze oder Verfärbung, Verstärkungsmittel und Weichmacher. Wenn Füllstoffe eingesetzt werden, so können diese anorganisch und/oder organisch sein.

Wenn das thermoplastische Polyurethan Füllstoffe enthält, so sind diese zum Beispiel organische oder anorganische Pulver oder Faserstoffe sowie Mischungen daraus. Als organische Füllstoffe können zum Beispiel Holzmehl, Stärke, Flachs-, Hanf-, Ramie-, Jute-, Sisal-, Baumwoll-, Zellulose- oder Aramidfasern eingesetzt werden. Als anorganische Füllstoffe eignen sich beispielsweise Silikat, Schwerspat, Glaskugeln, Zeolithe, Metalle oder Metalloxide. Besonders bevorzugt werden pulverförmige anorganische Stoffe wie Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, beispielsweise Eisenpulver, Glaskugeln, Glasfasern oder Kohlenstofffasern, eingesetzt. Die mittleren Teilchendurchmesser beziehungsweise bei faserförmigen Füllstoffen die Länge der Fasern sollte im Bereich der Zellgröße oder kleiner sein. Bevorzugt wird ein mittlerer Teilchendurchmesser beziehungsweise eine mittlere Länge der Fasern im Bereich von 0,01 bis 100 $\mu$m, bevorzugt im Bereich von 0,1 bis 50 $\mu$m. Bevorzugt sind expandierbare, treibmittelhaltige thermoplastische Polyurethane, die zwischen 5 bis 80 Gew.-% organische und/oder anorganische Füllstoffe enthalten, bezogen auf das Gesamtgewicht des treibmittelhaltigen thermoplastischen Polyurethans.

Zur Reduktion des Strahlungsbeitrags zur Wärmeleitfähigkeit kann das thermoplastische Polyurethan IR-Trübungsmittel wie Metalloxide, Nichtmetalloxide, Metallpulver, beispielsweise Aluminiumpulver, Kohlenstoff, zum Beispiel Ruß, Graphit, Graphen, Graphenoxide, Kohlenstoffnanoröhrchen, Diamant, oder organische Farbstoffe und Farbstoffpigmente enthalten, was besonders für Anwendungen bei hohen Temperaturen vorteilhaft ist. Besonders bevorzugt sind Ruß, Titandioxid, Eisenoxide oder Zirkondioxid. Diese Materialien können sowohl jeweils alleine als auch in Kombination, das heißt in Form einer Mischung aus mehreren Materialien, Verwendung finden.

Oberflächenaktive Substanzen, die in thermoplastischem Polyurethan enthalten sein können, sind zum Beispiel Verbindungen, die zur Unterstützung der Homogenisierung der Ausgangsstoffe dienen und gegebenenfalls auch geeignet sind, die Zellstruktur zu regulieren. Geeignete oberflächenaktive Substanzen sind zum Beispiel Emulgatoren, beispielsweise Natriumsalze von Rizinusölsulfaten oder von Fettsäuren sowie Salze von Fettsäuren mit Aminen, beispielsweise ölsaures Diethylamin, stearinsaures Diethanolamin, rizinolsaures Diethanolamin, Salze von Sulfonsäuren, beispielsweise Alkali- oder Ammoniumsalze von Dodecylbenzol- oder Dinaphthylmethandisulfonsäure und Rizinolsäure; Schaumstabilisatoren wie Siloxanoxalkylen-Mischpolymerisate und andere Organosiloxane, oxethylierte Alkylphenole, oxethylierte Fettalkohole, Paraffinöle, Rizinusöl- bzw. Rizinolsäureester, Türkisschrotöl und Erdnussöl und Zellregler, beispielsweise Paraffine, Fettalkohole und Dimethylpolysiloxan. Zur Verbesserung der Emulgierwirkung der Zellstruktur oder deren Stabilisierung eignen sich ferner oligomere Polyacrylate mit Polyoxalkylen- und Fluoralkanresten als Seitengruppen. Die oberflächenaktiven Substanzen werden üblicherweise in Mengen von 0,01 bis 5 Gew.-%, bezogen auf das Gesamtgewicht des thermoplastischen Polyurethans eingesetzt.

Geeignete Flammschutzmittel, die in dem thermoplastischen Polyurethan enthalten sein können, sind beispielsweise Tricresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat, und Tetrakis-(2-chlorethyl)ethylendiphosphat. Außer den bereits genannten halogensubstituierten Phosphaten können auch anorganische Flammschutzmittel mit rotem Phosphor, Aluminiumoxidhydrat, Antimontrioxid, Arsentrioxid, Ammoniumpolyphosphat und Calciumsulfat oder Cyanursäurederivate, beispiele Melamin oder Mischungen aus mindestens zwei Flammschutzmitteln, zum Beispiel Ammoniumphosphat und Melamin sowie gegebenenfalls Stärke und/oder Blähgraphit zum Flammfestmachen der hergestellten geschäumten Polyurethane verwendet werden. Im Allgemeinen hat es sich als zweckmäßig erwiesen, 0 bis 50 Gew.-%, vorzugsweise 5 bis 25 Gew.-% der Flammschutzmittel oder Flammschutzmittelmischung bezogen auf das Gesamtgewicht des thermoplastischen Polyurethans einzusetzen.

Um das expandierte thermoplastische Polyurethan herzustellen ist es weiterhin bevorzugt, wenn zusätzlich ein oder mehrere Nukleierungsmittel zugegeben werden. Als Nukleierungsmittel eignen sich insbesondere Talkum, Calciumfluorid, Natriumphenylphosphinat, Aluminiumoxid, Kohlenstoffe wie Ruß, Kohlenstoffnanoröhrchen, Graphit, Graphen und Graphenoxide, Pigmente und feinteiliges Polytetrafluorethylen jeweils einzeln oder auch in beliebigen Mischungen.

Besonders bevorzugt als Nukleierungsmittel ist Talkum. Der Anteil an Nukleierungsmittel bezogen auf die Gesamtmasse des thermoplastischen Polyurethans beziehungsweise der Schmelze des thermoplastischen Polyurethans liegt vorzugsweise bei 0 bis 4 Gew.-%, insbesondere bei 0,1 bis 2 Gew.-%.

Zur Herstellung des expandierten thermoplastischen Polyurethans können die bekannten Verfahren eingesetzt werden. Hierbei ist es insbesondere bevorzugt, wenn die eingesetzte Menge als Treibmittel zur Herstellung des expandierten thermoplastischen Polyurethans so gewählt wird, dass das expandierte thermoplastische Polyurethan zu über 85% geschlossenzellig ist und eine mittlere Zellgröße im Bereich von 0,1 bis 800 $\mu$m, bevorzugt im Bereich von 1 bis 500 $\mu$m und insbesondere im Bereich von 5 bis 250 $\mu$m und ganz bevorzugt im Bereich von 50 bis 150 $\mu$m aufweist. Der Anteil der geschlossenen Zellen und die Zellgröße können zum Beispiel optisch anhand mikroskopischer Aufnahmen bestimmt werden.

Als Treibmittel zur Herstellung der expandierten thermoplastischen Polyurethanpartikel können dabei alle dem Fachmann bekannten üblichen Treibmittel eingesetzt werden. Die eingesetzten Treibmittel hängen dabei vom Herstellverfahren der expandierten thermoplastischen Polyurethanpartikel ab und werden nachfolgend in Verbindung mit den Herstellverfahren der expandierten thermoplastischen Polyurethanpartikel näher beschrieben.

Zur Herstellung der expandierten thermoplastischen Polyurethanpartikel wird ein Verfahren eingesetzt, das folgende Schritte umfasst:

(a) Umsetzen eines Isocyanats mit einem Polyol als gegenüber dem Isocyanat reaktiver Verbindung sowie Kettenverlängerer gegebenenfalls in Gegenwart mindestens eines Kataly-sators und/oder Zusatzstoffes zu einem Polyurethan, wobei die Mengen an Isocyanat, gegenüber dem Isocyanat reaktiver Verbindung und Kettenverlängerer so eingestellt werden, dass das thermoplastische Polyurethan einen Hartphasenanteil im Bereich von 0,1 bis 0,95 aufweist und der Hartphasenanteil durch

$$Hartphasenanteil = \frac{\sum_{x=1}^{k}\left(\left(\frac{m_{KVx}}{M_{KVx}}\right) \cdot M_{Iso} + m_{KVx}\right)}{m_{ges}}$$

mit

- $M_{KVx}$: molare Masse des Kettenverlängerers x in g/mol,
- $m_{KVx}$: Masse des Kettenverlängerers x in g
- $M_{Ixo}$: molare Masse des verwendeten Isocyanates in g/mol
- $m_{ges}$: Gesamtmasse aller Ausgangsstoffe ohne Zusatzstoffe
- k: Anzahl der Kettenverlängerer

definiert ist, und der Kettenverlängerer ein Diol mit 5 bis 10 Kohlenstoffatomen, eine Mischung aus mindestens zwei unterschiedlichen Diolen, wobei mindestens ein Diol 4 bis 10 Kohlenstoffatome und alle weiteren Diole 2 bis 10 Kohlenstoffatome aufweisen, eine Mischung aus mindestens einem Diol mit 4 bis 10 Kohlenstoffatomen und mindestens einem Diamin oder eine Mischung aus mindestens einem Diol mit 4 bis 10 Kohlenstoffatomen und einem Aminoalkohol ist.

(b) Imprägnieren des Polyurethans mit einem Treibmittel;

(c) Entspannen des mit dem Treibmittel imprägnierten Polyurethans zum expandierten thermoplastischen Polyurethan.

Die Umsetzung des Isocyanats mit der gegenüber dem Isocyanat reaktiven Verbindung und dem Kettenverlängerer in Schritt (a) kann durch die dem Fachmann bekannten Verfahren kontinuierlich, beispielsweise mit Reaktionsextrudern oder dem Bandverfahren nach One-Shot oder dem Präpolymerverfahren, oder diskontinuierlich nach dem bekannten Präpolymerprozess erfolgen. Bei diesen Verfahren können die zur Reaktion kommenden Komponenten nacheinander oder gleichzeitig miteinander vermischt werden, wobei die Reaktion unmittelbar einsetzt.

Bei der Herstellung in einem Reaktionsextruder werden das Isocyanat, die gegenüber dem Isocyanat reaktive Verbindung und der Kettenverlängerer sowie gegebenenfalls der Katalysator und/oder die Zusatzstoffe einzeln oder als Gemisch in den Extruder eingeführt und zum Beispiel bei Temperaturen im Bereich von 100 bis 280°C, vorzugsweise im Bereich von 140 bis 250°C zur Reaktion gebracht. Das erhaltene thermoplastische Polyurethan wird extrudiert, abgekühlt und granuliert. Gegebenenfalls kann es zweckmäßig sein, das erhaltene thermoplastische Polyurethan vor der Weiterverarbeitung bei 80 bis 120°C, vorzugsweise bei 100 bis 110°C über einen Zeitraum von 1 bis 24 Stunden zu tempern.

Das hergestellte thermoplastische Polyurethan wird erfindungsgemäß zur Herstellung der expandierten Polyurethanpartikel eingesetzt. Die Partikel weisen vorzugsweise eine maximale Längenausdehnung im Bereich von 1 bis 25 mm, insbesondere eine maximale Längenausdehnung von 2 bis 15 mm auf.

Nach der Herstellung des thermoplastischen Polyurethans wird dieses mit einem Treibmittel imprägniert und abschließend zu expandierten thermoplastischen Polyurethanpartikeln entspannt.

In einer Ausführungsform ist es hier zum Beispiel möglich, dass das Polyurethan in einem Extruder mit dem Treibmittel imprägniert wird, das imprägnierte Polyurethan zu einem Granulat geschnitten wird und das Granulat nach dem Schneiden zu den expandierten thermoplastischen Polyurethanpartikeln entspannt. Um das Polyurethan mit dem Treibmittel zu imprägnieren, wird das thermoplastische Polyurethan in dem Extruder unter Aufschmelzen mit einem Treibmittel vermischt, das dem Extruder zugeführt wird. Die treibmittelhaltige Mischung wird dann entweder unter solchen Druck- und Temperaturbedingungen ausgepresst und granuliert, dass das Granulat aus dem thermoplastischen Polyurethan nicht schäumt (expandiert), wozu beispielsweise eine Unterwassergranulierung verwendet wird, die bei einem Wasserdruck von mehr als 2 bar und einer Wassertemperatur von 10 °C bis 40 °C betrieben wird. In diesem Fall werden treibmittelhaltige, expandierbare Partikel erhalten, die durch anschließendes Erwärmen zu den expandierten Partikeln geschäumt werden. Alternativ und bevorzugt ist es jedoch auch möglich, die Druck- und Temperaturbedingungen in der Unterwassergranulierung so einzustellen, dass eine Expansion begünstigt wird. In diesem Fall schäumt der den Extruder verlassende Schmelzestrang auf und durch Granulierung werden die expandierten Partikel erhalten. Der Druck und die Temperatur sind dabei abhängig vom eingesetzten Polyurethan und der Treibmittelmenge. Üblicherweise liegt der Druck im Bereich von 1 bis 20 bar, bevorzugt im Bereich von 2 bis 15 bar, und die Temperatur zwischen 20 °C und 60 °C, bevorzugt zwischen 20°C und 40°C. Der einzustellende Druck und die Temperatur sind dabei abhängig vom zu verarbeitenden Polyurethan.

Die Herstellung des thermoplastischen Polyurethans und die Zugabe des Treibmittels zur Herstellung des expandierten thermoplastischen Polyurethans können in zwei verschiedenen Extrudern erfolgen. Alternativ ist es jedoch auch möglich, nur einen Extruder einzusetzen. In diesem Fall dient der vordere Teil des Extruders, in den das Isocyanat, die mit dem Isocyanat reaktive Verbindung, der Kettenverlängerer und die gegebenenfalls weiteren Zusatzstoffe zugegeben werden als Reaktivextruder und an einer späteren Stelle im Extruder, an der die Umsetzung zum Polyurethan abgeschlossen ist, wird das Treibmittel zugegeben.

In einer alternativen Ausführungsform wird das in Schritt (a) hergestellte Polyurethan zu einem Granulat geschnitten. Dieses wird in wässriger Suspension mit 0,1 bis 40 Gew.-% eines Treibmittels bei einer Temperatur im Bereich von 100 bis 160°C und einem Druck im Bereich von 5 bis 100 bar imprägniert, die Suspension wird anschließend auf 20 bis 95°C abgekühlt und anschließend wird das so erhaltene treibmittelhaltige Granulat entspannt. Hierbei ist es zum einen möglich, die das Granulat enthaltende wässrige Suspension zunächst abzukühlen, wobei sich die Partikel unter Einschluss des Treibmittels verfestigen und anschließend den Reaktor zu entspannen. Die so erhaltenen treibmittelhaltigen Partikel werden anschließend durch Erwärmen zu den expandierten Partikeln verschäumt. Alternativ ist es auch möglich, die heiße, das Granulat enthaltende wässrige Suspension ohne abzukühlen schlagartig zu entspannen (Explosionsexpansionsverfahren), wobei die erweichten, treibmittelhaltigen Partikel unmittelbar zu den expandierten Partikeln aufschäumen. Die Herstellung des expandierten thermoplastischen Polyurethans kann dabei im Prinzip wie in der WO-A 2007/082838 beschrieben erfolgen.

Das zur Herstellung der expandierten thermoplastischen Polyurethanpartikel eingesetzte Treibmittel kann in Abhängigkeit vom Herstellverfahren variieren. Bei Zugabe des Treibmittels in einen Extruder oder einem Imprägnierkessel werden als Treibmittel vorzugsweise flüchtige organische Verbindungen mit einem Siedepunkt bei Normaldruck von 1013 mbar im Bereich von -25 bis 160°C, insbesondere -10 bis 125°C eingesetzt. Gut geeignet sind gegebenenfalls halogensubstituierte Kohlenwasserstoffe, wobei halogenfreie Kohlenwasserstoffe bevorzugt werden. Besonders bevorzugt sind $C_4$-$C_{10}$-Alkane, beispielsweise die Isomere des Butans, Pentans, Cyclopentan, Hexans, Heptans, und Oktans, besonders bevorzugt s-Pentan. Geeignete Treibmittel sind außerdem sterisch anspruchsvollere Verbindungen, wie Alkohole, Ketone, Ester, Ether und organische Karbonate. Die organischen Treibmittel sind auch kombinierbar. Geeignete anorganische Gase sind Stickstoff, Luft, Ammoniak oder Kohlendioxid oder Kombinationen dieser bzw. Kombinationen mit den oben genannten weiteren Treibmitteln. Diese genannten anorganischen Gase können ebenfalls bei der Imprägnierung in einem Autoklaven verwendet werden.

Auch Halogenkohlenwasserstoffe können verwendet werden, bevorzugt ist das Treibmittel jedoch halogenfrei. Geringe Anteile halogenhaltiger Treibmittel im Treibmittelgemisch sollen jedoch nicht ausgeschlossen werden. Die Treibmittel können sowohl als Reinstoff als auch in beliebiger Mischung eingesetzt werden.

Neben den genannten Treibmitteln ist es sowohl bei der Herstellung des expandierten thermoplastischen Granulats durch Extrusion als auch in wässriger Suspension möglich, Stickstoff und/oder Kohlendioxid, insbesondere überkritisches Kohlendioxid, einzusetzen.

Die Treibmittelmenge liegt vorzugsweise im Bereich von 0,1 bis 40 Gew.-Teile, insbesondere 0,5 bis 35 und besonders bevorzugt 1 bis 30 Gew.-Teile bezogen auf 100 Gew.-Teile eingesetztes thermoplastisches Polyurethan.

Die expandierten thermoplastischen Polyurethanpartikel werden insbesondere zur Herstellung von Formteilen aus Partikelschäumen genutzt. Um ein Formteil aus solchen expandierten thermoplastischen Polyurethanpartikeln herzustellen, umfasst ein geeignetes Verfahren folgende Schritte:

(a) Einbringen der expandierten thermoplastischen Polyurethanpartikel in ein Formwerkzeug;

(b) Beaufschlagen der in das Formwerkzeug eingebrachten expandierten thermoplastischen Polyurethanpartikel mit Wasserdampf, Heißluft oder energiereicher Strahlung, so dass die expandierten thermoplastischen Polyurethanpartikel an der Oberfläche anschmelzen und zum Formteil verschweißen.

Die zum Verschweißen erforderliche Erwärmung der Oberfläche der expandierten thermoplastischen Polyurethanpartikel, so dass diese anschmelzen, wird durch Beaufschlagung mit Wasserdampf, Heißluft oder energiereicher Strahlung jeweils einzeln oder in beliebigen Kombinationen erzielt. Geeignete energiereiche Strahlung ist zum Beispiel Mikrowellenstrahlung, Radiostrahlung oder Infrarotstrahlung. Bevorzugt ist jedoch der Einsatz von Wasserdampf oder Heißluft, insbesondere von Wasserdampf.

Wenn zum Verschweißen der expandierten thermoplastischen Polyurethanpartikel Wasserdampf eingesetzt wird, kann die Temperatur des Wasserdampfes, der in das Formwerkzeug eingebracht wird, durch den Druck eingestellt werden. Je höher der Druck ist, umso höher ist die Siedetemperatur des Wassers und damit die Temperatur, die der Wasserdampf einnehmen kann. Neben gesättigtem Wasserdampf ist auch der Einsatz von überhitztem Wasserdampf oder ungesättigtem Wasserdampf möglich. Geeignete Drücke, mit denen der Wasserdampf in das Formwerkzeug eingebracht wird, liegen bei 0,1 bar bis 6 bar, bevorzugt 0,3 bis 3 bar.

Durch den Einsatz des erfindungsgemäßen expandierten thermoplastischen Polyurethans ist es möglich, auf diese Weise auch Formteile mit einem hohen Hartphasenanteil, insbesondere einem Hartphasenanteil größer als 0,35 herzustellen und damit Formteile mit einem vergleichsweise hohen Speichermodul bei Raumtemperatur (gemessen an einer 2 mm dicken, für 20 h bei 100 °C getemperten Spritzgussplatte in Anlehnung an DIN EN ISO 6721-2:2011 im Torsionsmodus, mit einer Frequenz von 1 Hz und einer Heizrate von 20 K/min von -80 °C bis 200 °C) und entsprechend großer Härte, da trotz des hohen Hartphasenanteils eine Verarbeitungstemperatur, insbesondere der Beginn des Schmelzbereichs der Hartphase des expandierten thermoplastischen Polyurethans, erhalten wird, die unterhalb von 160°C, bevorzugt im Bereich von 100 bis 140° C, liegt. Der Beginn des Aufschmelzens der Hartphase korreliert mit dem plötzlichen Abfall des Speichermoduls am Ende des viskoelastischen Plateaus bei einer Temperatur oberhalb von 80 °C. Der Druck und die Temperatur des zur Herstellung des Formteils eingesetzten Wasserdampfes werden dabei so gewählt, dass bei Beaufschlagung mit dem Wasserdampf das eingesetzte Granulat aus expandiertem thermoplastischem Polyurethan lediglich an der Oberfläche anschmilzt und sich somit benachbarte Partikel miteinander verbinden. Bei der Herstellung des Formteiles ist zu vermeiden, dass das thermoplastische Polyurethan vollständig aufschmilzt, da in diesem Fall ein massiver Block entstehen würde. Um ein vollständiges Aufschmelzen des expandierten thermoplastischen Granulates zu vermeiden, wird die Dauer, mit der die expandierten thermoplastischen Polyurethanpartikel mit dem Wasserdampf, der Heißluft oder der energiereichen Strahlung beaufschlagt werden, so eingestellt, dass nur ein Anschmelzen der Oberfläche erfolgt. Das bedeutet, dass mit Zunahme der Temperatur des Wasserdampfes oder der Heißluft beziehungsweise der Intensität der energiereichen Strahlung eine Verkürzung der Dauer der Beaufschlagung erfolgt. Um ein Anschmelzen sicherzustellen, ist es bei Einsatz von Wasserdampf oder Heißluft erforderlich, dass die Temperatur des Wasserdampfs beziehungsweise der Heißluft oberhalb der Schmelztemperatur des expandierten thermoplastischen Polyurethans liegt. Bevorzugt wird das Verschweißen so durchgeführt, dass die partikulare Oberflächenstruktur des finalen Formteils weitestgehend erhalten bleibt.

Formteile, die auf diese Weise hergestellt werden können, sind zum Beispiel Schuhsohlen, Gymnastikmatten, Körperprotektoren, Auskleidungselemente im Automobilbau, Schalldämpfer, Schwingungsdämpfer, zum Beispiel für Federgabeln, Polsterungen, Fahrradsattel, Spielzeuge, Reifen oder Reifenteile, Beläge für Leichtathletiklaufbahnen, Sporthallen oder Gehwege oder Verpackungen.

Beispiele

Herstellung der Beispiel- und Referenzmaterialien

Mit einem Abstand von 6 L/D vom Beginn des Verfahrensteils eines Zweischneckenextruders ZSK43 der Fa. Coperion GmbH als Reaktionsextruder wurden zur Mischung und Synthese verschiedener thermoplastischer Polyurethane 4,4'-Diphenylmethandiisocyanat, Polytetramethylenglykol mit einer zahlenmittleren Molmasse ($M_n$) von 1000 ± 100 g/mol, ein Diol sowie 1 Gew. % UV- und thermische Stabilisatoren dosiert, bei einer Temperatur zwischen 180 und 220°C mit 30 ppm Zinn-(II)-dioctoat als Katalysator gemischt und zur Reaktion gebracht. Der Abstand von 6 L/D wird gewählt, um zu vermeiden, dass rückfließendes Monomer in das Getriebe gelangt. Die genauen Anteile der einzelnen Komponenten der jeweiligen Beispiel- und Referenzmaterialien sind in Tabelle 1 aufgelistet.

Aus dem Reaktionsextruder wird die Reaktionsmischung in einen Zweischneckenextruder ZSK92 der Firma Coperion GmbH als Hauptextruder überführt. Der Einzug des Hauptextruders befindet sich im Abstand von 6 L/D vom Beginn des Verfahrensteils. Im Hauptextruder wird die Reaktion bei Temperaturen im Bereich von 200 bis 240°C weiter vorangetrieben.

Über eine Schmelzepumpe wird die Polymerschmelze durch eine auf 200°C temperierte Lochplatte in eine mit Wasser durchströmte Granulierkammer gedrückt. Der Durchmesser der Löcher in der Lochplatte beträgt 1,8 mm. Durch rotierende Messer in der Granulierkammer wird die Polymerschmelze an der Lochplatte in Granulatkörner geschnitten. Die Granulatkörner werden mit dem Wasser aus der Granulierkammer ausgetragen und zu einem Zentrifugaltrockner gefördert. Im Zentrifugaltrockner werden die Granulatkörner aus dem Wasser abgeschieden und anschließend bei 70 °C für 4 h getrocknet.

Tabelle 1: Mengen der in den Reaktionsextruder dosierten Komponenten der thermoplastischen Materialien als Beispiel- und Referenzmaterialien

| Bezeichnung | Polytetramethylenglykol | 4,4'-Diphenylmethandiisocyanat | Diol |
|---|---|---|---|
| Bsp. Mat. 1 | 57 Gew. % | 33,1 Gew. % | 8,9 Gew. % 1,6-Hexandiol |
| Bsp. Mat. 2 | 53,8 Gew. % | 35 Gew. % | 10,2 Gew. % 1,6-Hexandiol |
| Bsp. Mat. 3 | 49,1 Gew. % | 37,8 Gew. % | 12,1 Gew. % 1,6-Hexandiol |
| Ref. Mat. 1 | 59,2 Gew. % | 33,2 Gew. % | 6,6 Gew. % 1,4-Butandiol |

(fortgesetzt)

| Bezeichnung | Polytetramethylenglykol | 4,4'-Diphenylmethandiisocyanat | Diol |
|---|---|---|---|
| Ref. Mat. 2 | 56,3 Gew. % | 35,2 Gew. % | 7,5 Gew. % 1,4-Butandiol |
| Ref. Mat. 3 | 53 Gew. % | 37,4 Gew. % | 8,6 Gew. % 1,4-Butandiol |
| Ref. Mat. 4 | 59,2 Gew. % | 33,9 Gew. % | 5,8 Gew. % 1,3-Propandiol |

Durch diese Herstellung werden thermoplastische Polyurethane mit den in Tabelle 2 aufgelisteten Eigenschaften erhalten. Dabei wurde die Shore Härte an Spritzgussplatten, die 20 h bei 100 °C getempert waren, bei Raumtemperatur nach DIN ISO 7619-1:2012 nach einer Eindruckzeit von 3 s bestimmt, die Schmelze-Massefließrate (melt flow rate, MFR) an den Granulaten in Anlehnung an DIN EN ISO1133-2:2012 gemessen und der Beginn des Schmelzbereichs der Hartphase aus Messungen zur dynamisch mechanischen Analyse (DMA) (Heizrate 20 K/min, Frequenz 1 Hz) nach DIN EN ISO 6721-2:2011 im Torsionsmodus bestimmt.

Tabelle 2: Eigenschaften der hergestellten Beispiel- und Referenzmaterialien

| Bezeichnung | Shore Härte | MFR (190 °C,21,6 kg) | Beginn des Schmelzbereichs der Hartphase |
|---|---|---|---|
| Bsp. Mat. 1 | 83 ± 2 A | >40g/10 min | 110 °C |
| Bsp. Mat. 2 | 85 ± 2 A | >40g/10 min | 110 °C |
| Bsp. Mat. 3 | 90 ± 2 A | >40g/10 min | 110 °C |
| Ref. Mat. 1 | 83 ± 2 A | >40g/10 min | 115 °C |
| Ref. Mat. 2 | 85 ± 2 A | >40g/10 min | > 120 °C |
| Ref. Mat. 3 | 90 ± 2 A | >40g/10 min | > 120 °C |
| Ref. Mat. 4 | 83 ± 2 A | >40g/10 min | > 120 °C |

Herstellung des expandierten Granulats durch Imprägnierung in einem Extruder

Nach der Herstellung der Einsatzstoffe wurden diese wie folgt zu expandierten thermoplastischen Polyurethangranulaten weiterverarbeitet. Hierzu wurden die getrockneten Beispiel- und Referenzmaterialien in einem Doppelschneckenextruder (ZE 75, KraussMaffei Bernstorff) mit weiteren Additiven 0,1 Gew.-% Talkum als Nukleierungsmittel und gegebenenfalls einem TPU, welches in einem separaten Extrusionsprozess mit 4,4'-Diphenylmethandiisocyanat mit einer mittleren Funktionalität von 2,05 versetzt wurde, gemischt und in einem Temperaturbereich von 160 °C bis 220 °C aufgeschmolzen. Als Treibmittel wurden $CO_2$ und $N_2$ im Extruder in die Schmelze injiziert und mit dem thermoplastischen Polyurethan und den weiteren Additiven zu einer homogenen Schmelze vermischt. Die exakte Zusammensetzung der einzelnen Beispiele und Vergleichsbeispiele ist in Tabelle 3 aufgelistet. Das Schmelzgemisch wurde anschließend über eine Zahnradpumpe (ca.160-200°C je nach Materialzusammensetzung) in eine Lochplatte (ca. 180 - 200°C je nach Materialzusammensetzung) gedrückt und in der Schneidkammer der Unterwassergranulierung (UWG) zu Granulaten geschnitten und mit dem temperierten und unter Druck stehenden Wasser abtransportiert und dabei expandiert. Nach der Abscheidung der expandierten Granulate aus dem Wasser mittels eines Zentrifugaltrockners werden die expandierten Granulate bei 60 °C für 2 h getrocknet. Die für die einzelnen Beispiele und Vergleichsbeispiele verwendete Wassertemperatur und der Wasserdruck sowie die resultierenden Schüttdichten der expandierten Granulate sind in Tabelle 3 aufgelistet. In den Beispielen 1 bis 3 wurde das Beispielmaterial 2 eingesetzt, in Beispiel 4 das Beispielmaterial 3. In den Vergleichsbeispielen 1, 2, 5 und 6 wurde das Referenzmaterial 1 eingesetzt, im Vergleichsbeispiel 3 das Referenzmaterial 2, im Vergleichsbeispiel 4 das Referenzmaterial 3 und im Vergleichsbeispiel 7 das Referenzmaterial 4. Zusätzlich wurde in den Beispielen 3 und 4 sowie den Vergleichsbeispielen 2, 3 und 4 jeweils 1 Gew.-% des TPUs, welches in einem separaten Extrusionsprozess mit 4,4'-Diphenylmethandiisocyanat mit einer mittleren Funktionalität von 2,05 versetzt wurde, zugegeben.

Tabelle 3: Daten zu den Beispielen und Vergleichsbeispielen

| | Anteil des Beispiel- bzw. Referenzmaterials (Gew. %) | Partikelmasse (mg) | Schüttdichte (kg/m³) | $CO_2$ (Gew. %) | $N_2$ (Gew. %) | Wasserdruck in der UWG (bar) | Wassertemperatur in der UWG (°C) |
|---|---|---|---|---|---|---|---|
| Bsp. 1 | 99,9 | 25 | 132 | 1,0 | 0,22 | 2,5 | 23 |
| Bsp. 2 | 99,9 | 32 | 131 | 1,0 | 0,21 | 3,0 | 23 |
| Bsp. 3 | 98,9 | 32 | 121 | 1,2 | 0,21 | 4,5 | 30 |
| Bsp. 4 | 98,9 | 32 | 122 | 1,2 | 0,22 | 3 | 30 |
| Vergl. Bsp. 1 | 99,9 | 25 | 139 | 1,2 | 0,22 | 3,6 | 30 |
| Vergl. Bsp. 2 | 98,9 | 25 | 129 | 1,0 | 0,23 | 2,6 | 20 |
| Vergl. Bsp. 3 | 98,9 | 25 | 147 | 1,2 | 0,16 | 3,1 | 38 |
| Vergl. Bsp. 4 | 98,9 | 25 | 138 | 0,7 | 0,25 | 1,8 | 35 |
| Vergl. Bsp. 5 | 99,9 | 32 | 123 | 1,1 | 0,21 | 3,3 | 30 |
| Vergl. Bsp. 6 | 98,9 | 32 | 133 | 1,2 | 0,21 | 3 | 30 |
| Vergl. Bsp. 7 | 99,9 | 25 | 160 | 1,0 | 0,21 | 2,6 | 27 |

Die expandierten Granulate wurden anschließend auf einem Formteilautomaten der Firma Kurtz ersa GmbH (Boost Foamer) zu quadratischen Platten mit einer Seitenlänge von 200 mm und einer Dicke von 10 mm bzw. 20 mm durch Beaufschlagung mit Wasserdampf verschweißt. Dabei wurden die identischen Bedampfungsbedingungen unabhängig von der Plattendicke verwendet. Die Verschweißparameter der unterschiedlichen Materialien wurden so gewählt, dass die Plattenseite des finalen Formteils, welche der beweglichen Seite des Werkzeugs zugewandt war, eine möglichst geringe Anzahl an kollabierten ETPU Partikeln aufwies. Durch die bewegliche Seite des Werkzeugs erfolgte gegebenenfalls auch die Spaltbedampfung. Das Erreichen einer zufriedenstellenden Oberflächengüte war bei den Vergleichsbeispielen nicht immer möglich. Unabhängig von dem Versuch wurde am Ende immer eine Kühlzeit von 120 s von der festen und der beweglichen Seite des Werkzeugs eingestellt. Die jeweiligen Bedampfungsbedingungen sind in Tabelle 4 als Dampfdrücke und in Tabelle 5 als korrespondierende Dampftemperaturen aufgelistet. Dabei ergibt sich ein geringerer benötigter maximaler Dampfdruck zur Verschweißung der Polyurethanpartikel der Beispiele gegenüber denen der Vergleichsbeispiele.

Die Oberflächen der Platten, welche der beweglichen Seite des Werkzeugs zugewandt waren, sind in den Figuren dargestellt.

Es zeigen:

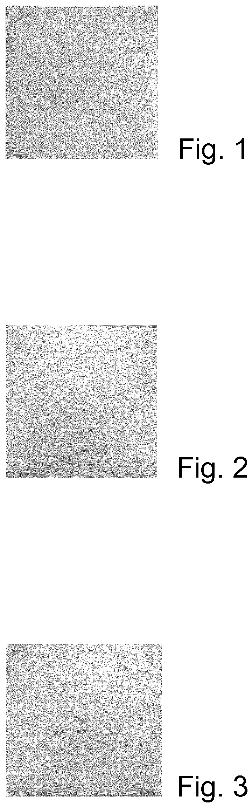

Fig. 1    eine Oberflächenaufnahme der im Beispiel 1 hergestellten Platte,
Fig. 2    eine Oberflächenaufnahme der im Beispiel 3 hergestellten Platte,
Fig. 3    eine Oberflächenaufnahme der im Beispiel 4 hergestellten Platte,

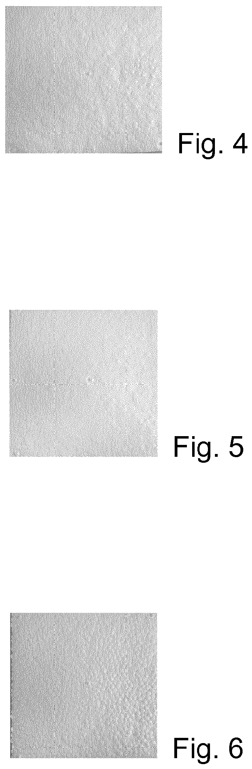

Fig. 4    eine Oberflächenaufnahme der im Vergleichsbeispiel 3 hergestellten Platte,
Fig. 5    eine Oberflächenaufnahme der im Vergleichsbeispiel 4 hergestellten Platte,
Fig. 6    eine Oberflächenaufnahme der im Vergleichsbeispiel 6 hergestellten Platte.

Hierbei lässt sich deutlich erkennen, dass bei vergleichbaren Shore-Härten des Ausgangsmaterials, die in Tabelle 2 aufgelistet sind, nur bei den gemäß der Beispiele sowie der gemäß Vergleichsbeispiel 6 hergestellten Platte zufriedenstellende Oberflächen, bei denen auch noch die Partikelstruktur erkennbar ist, erhalten werden. Bei den nach Vergleichsbeispiel 3 und 4 hergestellten Platten ergibt sich eine glatte Oberfläche, was auf eine plastische Veränderung der Oberflächenstruktur der Platte hindeutet.

Tabelle 4: Dampfüberdrücke und Zeiten zur Verschweißung der Materialien der Beispiele und Vergleichsbeispiele

| | Spaltbedampfung (bar) | Spaltbedampfung (s) | Querdampf feste Seite (bar) | Querdampf feste Seite (s) | Querdampf bewegliche Seite (bar) | Querdampf bewegliche Seite (s) | Autoklavdampf feste / bewegliche Seite (bar) | Autoklavdampf (s) |
|---|---|---|---|---|---|---|---|---|
| Bsp. 1 | 0,75 | 10 | 1,2 | 20 | - | - | - | - |
| Bsp. 2 | 0,75 | 10 | 1,2 | 20 | - | - | - | - |
| Bsp. 3 | - | - | 1,6 | 10 | 1,6 | 10 | 1,0/1,0 | 15 |
| Bsp. 4 | - | - | 1,3 | 40 | - | - | 1,3/0,8 | 10 |
| Vergl. Bsp. 1 | 1,3 | 18 | 1,8 | 30 | - | - | - | - |
| Vergl. Bsp. 2 | 0,4 | 5 | 2,2 | 40 | 2,2 | 40 | - | - |
| Vergl. Bsp. 3 | 0,7 | 30 | 2,2 | 7 | 2,6 | 7 | 1,9/1,9 | 32 |
| Vergl. Bsp. 4 | - | - | 1,9 | 7 | 1,9 | 7 | 1,9/1,9 | 32 |
| Vergl. Bsp. 5 | - | - | 1,1 | 15 | 1,3 | 30 | - | - |
| Vergl. Bsp. 6 | - | - | 1,9 | 10 | 2 | 20 | - | - |
| Vergl. Bsp. 7 | Verschweißen bei 3 bar nicht möglich | | | | | | | |

Tabelle 5: Dampftemperaturen (gemessen am Werkzeug) und Zeiten zur Verschweißung der Materialien der Beispiele und Vergleichsbeispiele

| | Spaltbedampfung (°C) | Spaltbedampfung (s) | Querdampf feste Seite (°C) | Querdampf feste Seite (s) | Querdampf bewegliche Seite (°C) | Querdampf bewegliche Seite (s) | Autoklavdampf feste / bewegliche Seite (°C) | Autoklavdampf (s) |
|---|---|---|---|---|---|---|---|---|
| Bsp. 1 | 116 | 10 | 123 | 20 | - | - | - | - |
| Bsp. 2 | 116 | 10 | 123 | 20 | - | - | - | - |
| Bsp. 3 | - | - | 128 | 10 | 128 | 10 | 120/120 | 15 |
| Bsp. 4 | - | - | 124 | 40 | - | - | 124/116 | 10 |
| Vergl. Bsp. 1 | 124 | 18 | 131 | 30 | - | - | - | - |
| Vergl. Bsp. 2 | 109 | 5 | 135 | 40 | 135 | 40 | - | - |
| Vergl. Bsp. 3 | 115 | 30 | 135 | 7 | 139 | 7 | 132/132 | 32 |
| Vergl. Bsp. 4 | - | - | 132 | 7 | 132 | 7 | 132/132 | 32 |
| Vergl. Bsp. 5 | - | - | 121 | 15 | 124 | 30 | - | - |
| Vergl. Bsp. 6 | - | - | 132 | 10 | 133 | 20 | - | - |
| Vergl. Bsp. 7 | Verschweißen bei 143 °C nicht möglich | | | | | | | |

Die Verschweißungsgüte der Platten kann mittels der Weiterreißfestigkeit bestimmt werden (DIN ISO 34-1, Prüfkörper 100 x 50 mm mit 50 mm Einschnitt). Je höher die Weiterreißfestigkeit ist, desto besser ist die Verschweißung bei Ausgangsmaterialien mit identischer Shorehärte. Die Werte der Beispiele und Vergleichsbeispiele sind in Tabelle 6 aufgelistet.

Tabelle 6: Ergebnisse der Weiterreißfestigkeit der verschweißten Platten der Beispiele und Vergleichsbeispiele (Plattendicke 20 mm)

|  | Plattendichte (kg/m$^3$) | Weiterreißfestigkeit (N/mm) |
|---|---|---|
| Bsp. 1 | 236 | 4 ± 0,11 |
| Bsp. 2 | 232 | 3,58 ± 0,28 |
| Bsp. 3 | 208 | 3,9 ± 0,3 |
| Bsp. 4 | 226 | 2,58 ± 0,1 |
| Vergl. Bsp. 1 | 287 | 3,96 ± 0,17 |
| Vergl. Bsp. 2 | 292 | 3,45 ± 0,10 |
| Vergl. Bsp. 3 | 327 | 3,5 ± 0,2 |
| Vergl. Bsp. 4 | 299 | 0,59 ± 0,1 |
| Vergl. Bsp. 5 | 272 | 1,88 ± 0,59 |
| Vergl. Bsp. 6 | 263 | 1,57 ± 0,27 |

Alternativ zur Weiterreißfestigkeit kann auch die Zugfestigkeit der Proben getestet werden. Diese wurde für eine Plattendicke von 10 mm in Anlehnung an die für Textilien erstellte ASTM D5035:2015 bestimmt und die Werte sind in Tabelle 7 aufgelistet.

Tabelle 7: Ergebnisse der Zugprüfung der verschweißten Platten der Beispiele und Vergleichsbeispiele (Plattendicke 10 mm)

|  | Plattendichte (kg/m$^3$) | Zugfestigkeit (kPa) | Bruchdehnung (%) |
|---|---|---|---|
| Bsp. 1 | 270 | 1460 ± 90 | 169 ± 17 |
| Bsp. 2 | 235 | 911 ± 38 | 119 ± 3 |
| Bsp. 3 | 240 | 820 ± 20 | 104 ± 10 |
| Bsp. 4 | 230 | 850 ± 6 | 71 ± 13 |
| Vergl. Bsp. 1 | 301 | 812 ± 73 | 95 ± 14 |
| Vergl. Bsp. 2 | 305 | 919 ± 83 | 120 ± 17 |
| Vergl. Bsp. 3 | 310 | 819 ± 20 | 83 ± 4 |
| Vergl. Bsp. 4 | 314 | 730 ± 70 | 53 ± 8 |
| Vergl. Bsp. 5 | 281 | 450 ± 9 | 53 ± 11 |
| Vergl. Bsp. 6 | 291 | 710 ± 6 | 89 ± 10 |

Herstellung des expandierten Granulats durch Imprägnierung in einem Autoklaven

Für die Beispiele 5 und 6 sowie die Vergleichsbeispiele 8 und 9 wurden die Beispielmaterialien 2 und 3 bzw. die Referenzmaterialien 2 und 3 wie nachfolgend beschrieben weiterverarbeitet.

Die Versuche wurden mit einem Kesselfüllgrad von 80 % und einem Phasenverhältnis von 0,39 durchgeführt. Das Phasenverhältnis ist dabei definiert als das Verhältnis der Massen von Granulat zu Suspensionsmedium, in den Beispielen Wasser.

100 Gewichtsteile des Granulats (entsprechend 28,0 Gew.-%, bezogen auf die gesamte Suspension ohne Treibmittel), 257 Gewichtsteile Wasser (entsprechend 72,0 Gew.-%, bezogen auf die gesamte Suspension ohne Treibmittel), 0,13 Gewichtsteile einer oberflächenaktiven Substanz (Lutensol AT 25) (entsprechend 0,04 Gew.-%, bezogen auf die gesamte Suspension ohne Treibmittel) und die entsprechende Menge Butan als Treibmittel (bezogen auf die eingesetzte Granulatmenge) wurden unter Rühren erhitzt. Danach wurde bei 50°C der Flüssigphase zusätzlich Stickstoff aufgepresst und der Innendruck wurde auf einen Druck von 800 kPa eingestellt. Anschließend wurde bei Erreichen der Imprägniertemperatur und gegebenenfalls nach Einhaltung einer Haltezeit und bei dem sich am Ende eingestellten Imprägnierdruck über eine Entspannungsvorrichtung entspannt.

Als Haltezeit wird die Zeit definiert, bei der sich die Temperatur der Flüssigphase in einem Temperaturbereich von 5°C unter der Imprägniertemperatur und 2°C über der Imprägniertemperatur befindet.

Nach der Trocknung wird die Schüttdichte der resultierenden Schaumstoffpartikel gemessen.

Die genauen Herstellparameter und die Schüttdichte des resultierenden Produkts sind in Tabelle 8 aufgeführt.

Tabelle 8: Daten zu den Beispielen und Vergleichsbeispielen

| | Verwendetes Material | Treibmittelgehalt [%] | Imprägniertemperatur [°C] | Haltezeit [min] | Imprägnierdruck [bar] | Partikelmasse [mg] | Schüttdichte [kg/m$^3$] |
|---|---|---|---|---|---|---|---|
| Bsp. 5 | Bsp. Mat. 2 | 24 | 122 | 23 | 26,0 | 32 | 105 |
| Bsp. 6 | Bsp. Mat. 3 | 24 | 127 | 30 | 29,3 | 32 | 72 |
| Vergl. Bsp. 8 | Ref. Mat. 2 | 24 | 128 | 3 | 30,4 | 32 | 131 |
| Vergl. Bsp. 9 | Ref. Mat. 3 | 24 | 135 | 3 | 34,7 | 32 | 142 |

Die expandierten Granulate wurden anschließend auf einem Formteilautomaten der Firma Kurtz ersa GmbH (Boost Foamer) zu quadratischen Platten mit einer Seitenlänge von 200 mm und einer Dicke von 10 mm durch Beaufschlagung mit Wasserdampf verschweißt. Die Verschweißparameter der unterschiedlichen Materialien wurden so gewählt, dass die Plattenseite des finalen Formteils, welche der beweglichen Seite des Werkzeugs zugewandt war, eine möglichst geringe Anzahl an kollabierten ETPU Partikeln aufwies. Durch die bewegliche Seite des Werkzeugs erfolgte gegebenenfalls auch die Spaltbedampfung. Das Erreichen einer zufriedenstellenden Oberflächengüte war bei den Vergleichsbeispielen nicht immer möglich. Die unterschiedlichen Temperaturen und Bedampfungszeiten für die Beispiele und die Vergleichsbeispiele waren notwendig, um vergleichbare Platten zu erzeugen. Bei gleichen Bedingungen waren die Partikel der Vergleichsbeispiele entweder nicht homogen verschweißt oder an der Oberfläche kollabiert. Unabhängig von dem Versuch wurde am Ende immer eine Kühlzeit von 120 s von der festen und der beweglichen Seite des Werkzeugs eingestellt. Die jeweiligen Bedampfungsbedingungen sind in Tabelle 9 als Dampfdrücke und in Tabelle 10 als korrespondierende Dampftemperaturen aufgelistet. Dabei ergibt sich ein geringerer benötigter maximaler Dampfdruck zur Verschweißung der Polyurethanpartikel der Beispiele gegenüber denen der Vergleichsbeispiele.

Tabelle 9: Dampfüberdrücke und Zeiten zur Verschweißung der Materialien der Beispiele und Vergleichsbeispiele

| | Spaltbedampfung (bar) | Spaltbedampfung (s) | Querdampf feste Seite (bar) | Querdampf feste Seite (s) | Querdampf bewegliche Seite (bar) | Querdampf bewegliche Seite (s) | Autoklavdampf feste / bewegliche Seite (bar) | Autoklavdampf (s) |
|---|---|---|---|---|---|---|---|---|
| Bsp. 5 | 1 | 20 | 1,9 | 4 | 1,9 | 7 | 1,9/1,9 | 32 |
| Bsp. 6 | 1 | 20 | 2,5 | 10 | 2,5 | 13 | 2,5/2,5 | 32 |
| Vergl. Bsp. 8 | 1 | 20 | 2,4 | 3 | 2,4 | 3 | 2,4/2,4 | 48 |
| Vergl. Bsp. 9 | 1 | 20 | 3,2 | 3 | 3,2 | 3 | 3,2/3,2 | 48 |

Tabelle 10: Dampftemperaturen (gemessen am Werkzeug) und Zeiten zur Verschweißung der Materialien der Beispiele und Vergleichsbeispiele

| | Spaltbedampfung (°C) | Spaltbedampfung (s) | Querdampf feste Seite (°C) | Querdampf feste Seite (s) | Querdampf bewegliche Seite (°C) | Querdampf bewegliche Seite (s) | Autoklavdampf feste / bewegliche Seite (°C) | Autoklavdampf (s) |
|---|---|---|---|---|---|---|---|---|
| Bsp. 5 | 120 | 20 | 132 | 4 | 132 | 7 | 132/132 | 32 |
| Bsp. 6 | 120 | 20 | 138 | 10 | 138 | 13 | 138/138 | 32 |
| Vergl. Bsp. 8 | 120 | 20 | 137 | 3 | 137 | 3 | 137/137 | 48 |
| Vergl. Bsp. 9 | 120 | 20 | 144 | 3 | 144 | 3 | 144/144 | 48 |

Zur Analyse der Verschweißungsgüte wurde die Zugfestigkeit der Proben getestet. Diese wurde für eine Plattendicke von 10 mm in Anlehnung an die für Textilien erstellte ASTM D5035:2015 bestimmt und die Werte sind in Tabelle 11 aufgelistet.

Tabelle 11: Ergebnisse der Zugprüfung der verschweißten Platten der Beispiele und Vergleichsbeispiele (Plattendicke 10 mm)

| | Plattendichte (kg/m³) | Zugfestigkeit (kPa) | Bruchdehnung (%) |
|---|---|---|---|
| Bsp. 5 | 203 | 580 ± 10 | 65 ± 7 |
| Bsp. 6 | 147 | 530 ± 70 | 53 ± 9 |
| Vergl. Bsp. 8 | 307 | 587 ± 100 | 74 ± 15 |
| Vergl. Bsp. 9 | 240 | 503 ± 80 | 58 ± 13 |

## Patentansprüche

1. Expandierte thermoplastische Polyurethanpartikel, aufgebaut aus Isocyanat, Polyol als gegenüber dem Isocyanat reaktiver Verbindung mit einem zahlenmittleren Molekulargewicht zwischen 500 und 10000 g/mol und Kettenverlängerer, wobei zusätzlich übliche Zusatzstoffe enthalten sein können, das thermoplastische Polyurethan einen Hartphasenanteil im Bereich von 0,15 bis 0,5 aufweist und der Hartphasenanteil durch

$$Hartphasenanteil = \frac{\sum_{x=1}^{k}\left(\left(\frac{m_{KVx}}{M_{KVx}}\right) \cdot M_{Iso} + m_{KVx}\right)}{m_{ges}}$$

mit

- $M_{KVx}$: molare Masse des Kettenverlängerers x in g/mol,
- $m_{KVx}$: Masse des Kettenverlängerers x in g
- $M_{Ixo}$: molare Masse des verwendeten Isocyanates in g/mol
- $m_{ges}$: Gesamtmasse aller Ausgangsstoffe ohne Zusatzstoffe
- k: Anzahl der Kettenverlängerer

definiert ist, und der Kettenverlängerer ein Diol mit 5 bis 10 Kohlenstoffatomen, eine Mischung aus mindestens zwei unterschiedlichen Diolen, wobei mindestens ein Diol 4 bis 10 Kohlenstoffatome und alle weiteren Diole 2 bis 10 Kohlenstoffatome aufweisen, eine Mischung aus mindestens einem Diol mit 4 bis 10 Kohlenstoffatomen und mindestens einem Diamin oder eine Mischung aus mindestens einem Diol mit 4 bis 10 Kohlenstoffatomen und einem Aminoalkohol ist.

2. Expandierte thermoplastische Polyurethanpartikel gemäß Anspruch 1, **dadurch gekennzeichnet, dass** das Isocyanat ausgewählt ist aus Trimethylendiisocyanat, Tetramethylendiisocyanat, Pentamethylendiisocyanat, Hexamethylendiisocyanat, Heptamethylendiisocyanat, Oktamethylendiisocyanat; 2-Methylpentamethylendiisocyanat-1,5; 2-Ethylbutylendiisocyanat-1,4; Butylendiisocyanat-1,4; 1-Isocyanato-3,3,5-trimethyl-5-isocyanatomethylcyclohexan; 1,4-Bis(isocyanatomethyl)cyclohexan; 1,4-Cyclohexandiisocyanat; 1-Methyl-2,4-cyclohexandiisocyanat;1-Methyl-2,6-cyclohexandiisocyanat; 2,2'-Dicyclohexylmethandiisocyanat; 2,4'-Dicyclohexylmethandiisocyanat; 4,4'-Dicyclohexylmethandiisocyanat; 2,2'-Diphenylmethandiisocyanat; 2,4'-Diphenylmethandiisocyanat; 4,4'-Diphenylmethandiisocyanat; 1,5-Naphthylendiisocyanat; 2,4-Toluylendiisocyanat; 2,6-Toluylendiisocyanat; Diphenylmethandiisocyanat; 3,3'-Dimethyldiphenyl-diisocyanat; 1,2-Dipehylethandiisocyanat und Phenylendiisocyanat sowie jede beliebige Mischung daraus.

3. Expandierte thermoplastische Polyurethanpartikel gemäß Anspruch 1 oder 2, **dadurch gekennzeichnet, dass** das Polyol als gegenüber dem Isocyanat reaktiver Verbindung ausgewählt ist aus Polyetherolen, Polyesterolen, Polybutandienolen und Polycarbonatolen und deren Mischungen sowie Blockcopolymeren daraus.

4. Expandierte thermoplastische Polyurethanpartikel gemäß einem der Ansprüche 1 bis 3, **dadurch gekennzeichnet, dass** bei nur einem Kettenverlängerer der Kettenverlängerer ausgewählt ist aus der Gruppe bestehend aus 1,5-Pentandiol, 1,6-Hexandiol, 1,7-Heptandiol, 1,8-Oktandiol, 1,9-Nonandiol, 1,10-Dekandiol, 1,4-Cyclohexyldimethanol, 2-Butyl-2-ethylpropandiol, Neopentylglykol, 2,2,4-Trimethyl-1,3-pentandiol, Pinakol, 2-Ethyl-1,3-hexandiol, 1,4-Cyclohexandiol, N-Phenyldiethanolamin.

5. Expandierte thermoplastische Polyurethanpartikel gemäß einem der Ansprüche 1 bis 3, **dadurch gekennzeichnet, dass** bei Einsatz einer Mischung aus mindestens zwei unterschiedlichen Diolen der Anteil des Diols mit 4 bis 10 Kohlenstoffatomen bezogen auf die Gesamtmasse des Kettenverlängerers im Bereich von 0,001 bis 50 Gew.-% liegt.

6. Expandierte thermoplastische Polyurethanpartikel gemäß Anspruch 5, **dadurch gekennzeichnet, dass** das erste Diol ausgewählt ist aus 1,4-Butandiol und 1,6-Hexandiol und alle weiteren Diole ausgewählt sind aus 1,2-Ethylenglykol, 1,2-Propylenglykol, 1,3-Propandiol, 1,4-Butandiol, 1,5-Pentandiol, 1,6-Hexandiol, 1,7-Heptandiol, 1,8-Oktandiol, 1,9-Nonandiol, 1,10-Dekandiol, 1,4-Cyclohexyldimethanol, 2-Butyl-2-ethylpropandiol, Neopentylglykol, 2,2,4-Trimethyl-1,3-pentandiol, Pinakol, 2-Ethyl-1,3-hexandiol, 1,4-Cyclohexandiol, N-Phenyldiethanolamin, wobei das erste Diol und alle weiteren Diole unterschiedlich sind.

7. Expandierte thermoplastische Polyurethanpartikel gemäß einem der Ansprüche 1 bis 6, **dadurch gekennzeichnet, dass** das expandierte thermoplastische Polyurethan geschlossenzellig ist und eine Zellgröße im Bereich von 1 bis 250 $\mu$m aufweist, wobei die Zellgröße optisch anhand mikroskopischer Aufnahmen bestimmt werden kann.

8. Expandierte thermoplastische Polyurethanpartikel gemäß einem der Ansprüche 1 bis 7, **dadurch gekennzeichnet, dass** das expandierte thermoplastische Polyurethan in Form von Partikeln mit einer maximalen Längenausdehnung von 1 bis 25 mm vorliegt.

9. Verfahren zur Herstellung expandierter thermoplastischer Polyurethanpartikel gemäß einem der Ansprüche 1 bis 8, folgende Schritte umfassend:

(a) Umsetzen eines Isocyanats mit einem Polyol als gegenüber dem Isocyanat reaktiver Verbindung sowie Kettenverlängerer gegebenenfalls in Gegenwart mindestens eines Katalysators und/oder Zusatzstoffes zu einem Polyurethan, wobei die Mengen an Isocyanat, Polyol als gegenüber dem Isocyanat reaktiver Verbindung und Kettenverlängerer so eingestellt werden, dass das thermoplastische Polyurethan einen Hartphasenanteil im Bereich von 0,15 bis 0,5 aufweist und der Hartphasenanteil durch

$$Hartphasenanteil = \frac{\sum_{x=1}^{k}\left(\left(\frac{m_{KVx}}{M_{KVx}}\right) \cdot M_{Iso} + m_{KVx}\right)}{m_{ges}}$$

mit

- $M_{KVx}$: molare Masse des Kettenverlängerers x in g/mol,
- $m_{KVx}$: Masse des Kettenverlängerers x in g
- $M_{Ixo}$: molare Masse des verwendeten Isocyanates in g/mol
- $m_{ges}$: Gesamtmasse aller Ausgangsstoffe ohne Zusatzstoffe
- k: Anzahl der Kettenverlängerer

definiert ist, und der Kettenverlängerer ein Diol mit 5 bis 10 Kohlenstoffatomen, eine Mischung aus mindestens zwei unterschiedlichen Diolen, wobei mindestens ein Diol 4 bis 10 Kohlenstoffatome und alle weiteren Diole 2 bis 10 Kohlenstoffatome aufweisen, eine Mischung aus mindestens einem Diol mit 4 bis 10 Kohlenstoffatomen und mindestens einem Diamin oder eine Mischung aus mindestens einem Diol mit 4 bis 10 Kohlenstoffatomen und einem Aminoalkohl ist,
(b) Imprägnieren des Polyurethans mit einem Treibmittel;
(c) Entspannen des mit dem Treibmittel imprägnierten Polyurethans zum expandierten thermoplastischen Polyurethan,

wobei das Polyurethan in einem Extruder mit dem Treibmittel imprägniert wird, das imprägnierte Polyurethan zu einem Granulat geschnitten wird und das Granulat unmittelbar nach dem Schneiden zu expandierten thermoplastischen Polyurethanpartikeln entspannt oder das in Schritt (a) hergestellte Polyurethan zu einem Granulat geschnitten wird, das Granulat in einem Kessel oder einem Autoklaven mit 0,1 bis 40 Gew.-% eines Treibmittels bei einer Temperatur im Bereich von 100 bis 180°C und einem Druck im Bereich von 5 bis 100 bar imprägniert wird und anschließend das treibmittelhaltige Granulat durch Entspannung geschäumt wird.

10. Verfahren gemäß Anspruch 9, **dadurch gekennzeichnet, dass** das Herstellen des Polyurethans in Schritt (a) in einem ersten Extruder oder einem ersten Extruderteil und die Imprägnierung der Schmelze in einem zweiten Extruder oder einem zweiten Extruderteil durchgeführt wird, das imprägnierte Polyurethan zu einem Granulat geschnitten wird und das Granulat unmittelbar nach dem Schneiden zu den expandierten thermoplastischen Polyurethanpartikeln entspannt.

11. Verfahren zur Herstellung eines Formteils aus expandierten thermoplastischen Polyurethanpartikeln gemäß einem der Ansprüche 1 bis 8, folgende Schritte umfassend:

   (a) Einbringen der expandierten thermoplastischen Polyurethanpartikel in ein Formwerkzeug;
   (b) Beaufschlagen der in das Formwerkzeug eingebrachten expandierten thermoplastischen Polyurethanpartikel mit Wasserdampf, Heißluft oder energiereicher Strahlung, so dass die expandierten thermoplastischen Polyurethanpartikel an der Oberfläche anschmelzen und zum Formteil verschweißen.

12. Verfahren gemäß Anspruch 11, **dadurch gekennzeichnet, dass** das Formteil eine Schuhsohle, eine Gymnastikmatte, ein Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, eine Sporthalle oder einen Gehweg, eine dämpfende Schicht oder ein dämpfender Kern in einem Sandwichelement oder eine Verpackung ist.

**Claims**

1. An expanded thermoplastic polyurethane bead polymerized from an isocyanate, a polyol as isocyanate-reactive compound having a number-average molecular weight between 500 and 10 000 g/mol and a chain extender, wherein customary adjuvants may be additionally present, the thermoplastic polyurethane has a hard phase fraction in the range from 0.15 to 0.5 and the hard phase fraction is defined by

$$\text{Hard phase fraction} = \frac{\sum_{x=1}^{k}\left(\left(\frac{m_{KVx}}{M_{KVx}}\right)\cdot M_{Iso} + m_{KVx}\right)}{m_{ges}}$$

where

   - $M_{KVx}$: molar mass of chain extender x in g/mol,
   - $m_{KVx}$: mass of chain extender x in g
   - $M_{Ixo}$: molar mass of isocyanate used in g/mol
   - $m_{tot}$: total mass of all starting materials without adjuvants
   - k: number of chain extenders,

   and the chain extender is a diol having 5 to 10 carbon atoms, a mixture of two or more differing diols wherein one or more than one diol has 4 to 10 carbon atoms and all further diols have 2 to 10 carbon atoms, a mixture of one or more than one diol having 4 to 10 carbon atoms and one or more than one diamine or a mixture of one or more than one diol having 4 to 10 carbon atoms and an aminoalcohol.

2. The expanded thermoplastic polyurethane bead according to claim 1 wherein the isocyanate is selected from trimethylene diisocyanate, tetramethylene diisocyanate, pentamethylene diisocyanate, hexamethylene diisocyanate, heptamethylene diisocyanate, octamethylene diisocyanate; 2-methylpentamethylene 1,5-diisocyanate; 2-ethylbutylene 1,4-diisocyanate; butylene 1,4-diisocyanate; 1-isocyanato-3,3,5-trimethyl-5-isocyanatomethylcyclohexane; 1,4-bis(isocyanatomethyl)cyclohexane; 1,4-cyclohexane diisocyanate; 1-methyl-2,4-cyclohexane diisocyanate; 1-methyl-2,6-cyclohexane diisocyanate; 2,2'-dicyclohexylmethane diisocyanate; 2,4'-dicyclohexylmethane diisocyanate; 4,4'-dicyclohexylmethane diisocyanate; 2,2'-diphenylmethane diisocyanate; 2,4'-diphenylmethane diisocyanate; 4,4'-diphenylmethane diisocyanate; 1,5-naphthylene diisocyanate; 2,4-tolylene diisocyanate; 2,6-tolylene diisocyanate; diphenylmethane diisocyanate; 3,3'-dimethylbiphenyl diisocyanate; 1,2-diphenylethane diisocyanate and phenylene diisocyanate and also any desired mixture thereof.

3. The expanded thermoplastic polyurethane bead according to claim 1 or 2 wherein the polyol as isocyanate-reactive compound is selected from polyetherols, polyesterols, polybutadienols and polycarbonateols and their mixtures and also block copolymers thereof.

4. The expanded thermoplastic polyurethane bead according to any one of claims 1 to 3 wherein in the case of just one chain extender the chain extender is selected from the group consisting of 1,5-pentanediol, 1,6-hexanediol, 1,7-heptanediol, 1,8-octanediol, 1,9-nonanediol, 1,10-decanediol, 1,4-cyclohexyldimethanol, 2-butyl-2-ethylpropanediol, neopentyl glycol, 2,2,4-trimethyl-1,3-pentanediol, pinacol, 2-ethyl-1,3-hexanediol, 1,4-cyclohexanediol and N-phenyldiethanolamine.

5. The expanded thermoplastic polyurethane bead according to any one of claims 1 to 3 wherein, when a mixture of two or more differing diols is used, the proportion of the diol having 4 to 10 carbon atoms is in the range from 0.001 to 50 wt% based on total chain extender mass.

6. The expanded thermoplastic polyurethane bead according to claim 5 wherein the first diol is selected from 1,4-butanediol and 1,6-hexanediol and all further diols are selected from 1,2-ethylene glycol, 1,2-propylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,4-cyclohexyldimethanol, 2-butyl-2-ethylpropanediol, neopentyl glycol, 2,2,4-trimethyl-1,3-pentanediol, pinacol, 2-ethyl-1,3-hexanediol, 1,4-cyclohexanediol and N-phenyldiethanolamine, wherein the first diol and all further diols differ.

7. The expanded thermoplastic polyurethane bead according to any one of claims 1 to 6 wherein the expanded thermoplastic polyurethane is closed cell and has a cell size in the range from 1 to 250 $\mu$m, wherein the cell size is quantifiable visually from micrographs.

8. The expanded thermoplastic polyurethane bead according to any one of claims 1 to 7 wherein the expanded thermoplastic polyurethane is in the form of beads having a maximum longitudinal dimension of 1 to 25 mm.

9. A process for producing the expanded thermoplastic polyurethane bead according to any one of claims 1 to 8, comprising the following steps of:

(a) reacting an isocyanate with a polyol as isocyanate-reactive compound and a chain extender optionally in the presence of one or more catalysts and/or adjuvants to form a polyurethane, wherein the amounts of isocyanate, of polyol as isocyanate-reactive compound and of chain extender are adjusted such that the thermoplastic polyurethane has a hard phase fraction in the range from 0.15 to 0.5 and the hard phase fraction is defined by

$$Hard\ phase\ fraction = \frac{\sum_{x=1}^{k}\left(\left(\frac{m_{KVx}}{M_{KVx}}\right) \cdot M_{Iso} + m_{KVx}\right)}{m_{ges}}$$

where

- $M_{KVx}$: molar mass of chain extender x in g/mol,
- $m_{KVx}$: mass of chain extender x in g
- $M_{Ixo}$: molar mass of isocyanate used in g/mol
- $m_{tot}$: total mass of all starting materials without adjuvants
- k: number of chain extenders,

and the chain extender is a diol having 5 to 10 carbon atoms, a mixture of two or more differing diols wherein one or more than one diol has 4 to 10 carbon atoms and all further diols have 2 to 10 carbon atoms, a mixture of one or more than one diol having 4 to 10 carbon atoms and one or more than one diamine or a mixture of one or more than one diol having 4 to 10 carbon atoms and an aminoalcohol,

(b) impregnating the polyurethane with a blowing agent,

(c) depressurizing the blowing agent-impregnated polyurethane into the expanded thermoplastic polyurethane,

wherein the polyurethane is impregnated with the blowing agent in an extruder, the impregnated polyurethane is cut into a pellet material and the pellet material is depressurized immediately after cutting into expanded thermoplastic polyurethane beads, or the polyurethane produced in step (a) is cut into a pellet material, the pellet material is impregnated in a tank or in an autoclave with 0.1 to 40 wt% of a blowing agent at a temperature in the range from 100 to 180°C and a pressure in the range from 5 to 100 bar and then the blowing agent-containing pellet material is foamed by depressurization.

10. The process according to claim 9 wherein the producing of the polyurethane in step (a) is carried out in a first extruder or a first extruder part and the impregnating of the melt is carried out in a second extruder or a second extruder part, the impregnated polyurethane is cut into a pellet material and the pellet material is depressurized immediately after cutting into expanded thermoplastic polyurethane beads.

11. A process for producing a molded part from the expanded thermoplastic polyurethane beads according to any one of claims 1 to 8, comprising the following steps of:

(a) introducing the expanded thermoplastic polyurethane beads into a mold, and

(b) subjecting the expanded thermoplastic polyurethane beads introduced into the mold to steam, hot air or high-energy radiation whereby the expanded thermoplastic polyurethane beads incipiently melt at the surface and fuse together to form the molded part.

12. The process according to claim 11 wherein the molded part is a shoe sole, a gymnastics mat, a body protector, a trim element in automotive construction, a sound absorber, a vibration absorber, a cushioning pad, a bicycle saddle, a toy, a tire or a tire part or a surface for an athletic running track, a sports hall or a footpath, a damping layer or a damping core in a sandwich element or a packaging item.

**Revendications**

1. Particules de polyuréthane thermoplastique expansé, constituées d'isocyanate, de polyol en tant que composé réactif vis-à-vis d'isocyanate, présentant une masse moléculaire moyenne en nombre entre 500 et 10.000 g/mole et des agents d'allongement de chaîne, des additifs usuels pouvant en plus être contenus, le polyuréthane thermoplastique présentant une proportion de phases dures dans la plage de 0,15 à 0,5 et la proportion de phases dures étant définie par la formule

$$\text{Proportion de phases dures} = \frac{\sum_{x=1}^{k}\left(\left(\frac{m_{KVx}}{M_{KVx}}\right) \cdot M_{Iso} + m_{KVx}\right)}{m_{ges}}$$

dans laquelle

- $M_{KVx}$ : masse molaire de l'agent d'allongement de chaîne x en g/mole,
- $m_{KVx}$ : masse de l'agent d'allongement de chaîne x en g,
- $M_{Ixo}$ : masse molaire de l'isocyanate utilisé en g/mole,
- $m_{ges}$ : masse totale de toutes les substances de départ sans additifs,
- k : nombre d'agents d'allongement de chaîne,

et l'agent d'allongement de chaîne étant un diol comprenant 5 à 10 atomes de carbone, un mélange d'au moins deux diols différents, dans lequel au moins un diol présente 4 à 10 atomes de carbone et tous les autres diols présentent 2 à 10 atomes de carbone, un mélange d'au moins un diol comprenant 4 à 10 atomes de carbone et d'au moins une diamine ou un mélange d'au moins un diol comprenant 4 à 10 atomes de carbone et d'un aminoalcool.

2. Particules de polyuréthane thermoplastique expansé selon la revendication 1, **caractérisées en ce que** l'isocyanate est choisi parmi le diisocyanate de triméthylène, le diisocyanate de tétraméthylène, le diisocyanate de pentaméthylène, le diisocyanate d'hexaméthylène, le diisocyanate d'heptaméthylène, le diisocyanate d'octaméthylène ; le 1,5-diisocyanate de 2-méthylpentaméthylène ; le 1,4-diisocyanate de 2-éthylbutylène ; le 1,4-diisocyanate de butylène ; le 1-isocyanato-3,3,5-triméthyl-5-isocyanatométhylcyclohexane ; le 1,4-bis(isocyanatométhyl)cyclohexane ; le diisocyanate de 1,4-cyclohexane ; le diisocyanate de 1-méthyl-2,4-cyclohexane ; le diisocyanate de 1-méthyl-2,6-cyclohexane ; le diisocyanate de 2,2'-dicyclohexylméthane ; le diisocyanate de 2,4'-dicyclohexylméthane ; le diisocyanate de 4,4'-dicyclohexylméthane ; le diisocyanate de 2,2'-diphénylméthane ; le diisocyanate de 2,4'-diphénylméthane ; le diisocyanate de 4,4'-diphénylméthane ; le diisocyanate de 1,5-naphtylène ; le diisocyanate de 2,4-toluylène ; le diisocyanate de 2,6-toluylène ; le diisocyanate de diphénylméthane ; le diisocyanate de 3,3'-diméthyldiphényle ; le diisocyanate de 1,2-diphényléthane et le diisocyanate de phénylène ainsi que n'importe quel mélange de ceux-ci.

3. Particules de polyuréthane thermoplastique expansé selon la revendication 1 ou 2, **caractérisées en ce que** le polyol, en tant que composé réactif vis-à-vis d'isocyanate, est choisi parmi les polyétherols, les polyesterols, les polybutanediénols et les polycarbonatols et leurs mélanges ainsi que leurs copolymères séquencés.

4. Particules de polyuréthane thermoplastique expansé selon l'une des revendications 1 à 3, **caractérisées en ce que**, dans le cas de seulement un agent d'allongement de chaîne, l'agent d'allongement de chaîne est choisi dans le groupe constitué par le 1,5-pentanediol, le 1,6-hexanediol, le 1,7-heptanediol, le 1,8-octanediol, le 1,9-nonanediol, le 1,10-décanediol, le 1,4-cyclohexyldiméthanol, le 2-butyl-2-éthylpropanediol, le néopentylglycol, le 2,2,4-triméthyl-1,3-pentanediol, le pinacol, le 2-éthyl-1,3-hexanediol, le 1,4-cyclohexanediol, la N-phényldiéthanolamine.

5. Particules de polyuréthane thermoplastique expansé selon l'une des revendications 1 à 3, **caractérisées en ce que** lors de l'utilisation d'un mélange d'au moins deux diols différents, la proportion du diol comprenant 4 à 10 atomes de carbone par rapport à la masse totale de l'agent d'allongement de chaîne se situe dans la plage de 0,001 à 50% en poids.

6. Particules de polyuréthane thermoplastique expansé selon la revendication 5, **caractérisées en ce que** le premier diol est choisi parmi le 1,4-butanediol et le 1,6-hexanediol et tous les autres diols sont choisis parmi le 1,2-éthylèneglycol, le 1,2-propylèneglycol, le 1,3-propanediol, le 1,4-butanediol, le 1,5-pentanediol, le 1,6-hexanediol, le 1,7-heptanediol, le 1,8-octanediol, le 1,9-nonanediol, le 1,10-décanediol, le 1,4-cyclohexyldiméthanol, le 2-butyl-2-éthylpropanediol, le néopentylglycol, le 2,2,4-triméthyl-1,3-pentanediol, le pinacol, le 2-éthyl-1,3-hexanediol, le 1,4-cyclohexanediol, la N-phényldiéthanolamine, le premier diol et tous les autres diols étant différents.

7. Particules de polyuréthane thermoplastique expansé selon l'une des revendications 1 à 6, **caractérisées en ce que** le polyuréthane thermoplastique expansé est à cellules fermées et présente une dimension de cellule dans la plage de 1 à 250 $\mu$m, la dimension des cellules pouvant être déterminée optiquement à l'aide de clichés microscopiques.

8. Particules de polyuréthane thermoplastique expansé selon l'une des revendications 1 à 7, **caractérisées en ce que** le polyuréthane thermoplastique expansé se trouve sous forme de particules présentant une extension longitudinale maximale de 1 à 25 mm.

9. Procédé pour la préparation de particules de polyuréthane thermoplastique expansé selon l'une des revendications 1 à 8, comprenant les étapes suivantes :

(a) transformation d'un isocyanate avec un polyol en tant que composé réactif vis-à-vis d'isocyanate ainsi que d'agents d'allongement de chaîne, le cas échéant en présence d'au moins un catalyseur et/ou d'additifs en un polyuréthane, les quantités d'isocyanate, de polyol en tant que composé réactif vis-à-vis d'isocyanate et d'agents d'allongement de chaîne étant réglées de manière telle que le polyuréthane thermoplastique présente une proportion de phases dures dans la plage de 0,15 à 0,5 et la proportion de phases dures étant définie par la formule

$$\text{Proportion de phases dures} = \frac{\sum_{x=1}^{k}\left(\left(\frac{m_{KVx}}{M_{KVx}}\right)\cdot M_{Iso} + m_{KVx}\right)}{m_{ges}}$$

dans laquelle

- $M_{KVx}$ : masse molaire de l'agent d'allongement de chaîne x en g/mole,
- $m_{KVx}$ : masse de l'agent d'allongement de chaîne x en g,
- $M_{Ixo}$ : masse molaire de l'isocyanate utilisé en g/mole,
- $m_{ges}$ : masse totale de toutes les substances de départ sans additifs,
- k : nombre d'agents d'allongement de chaîne,

et l'agent d'allongement de chaîne étant un diol comprenant 5 à 10 atomes de carbone, un mélange d'au moins deux diols différents, dans lequel au moins un diol présente 4 à 10 atomes de carbone et tous les autres diols présentent 2 à 10 atomes de carbone, un mélange d'au moins un diol comprenant 4 à 10 atomes de carbone et d'au moins une diamine ou un mélange d'au moins un diol comprenant 4 à 10 atomes de carbone et d'un aminoalcool ;
(b) imprégnation du polyuréthane par un agent gonflant ;
(c) détente du polyuréthane imprégné de l'agent gonflant en polyuréthane thermoplastique expansé,

le polyuréthane étant imprégné par l'agent gonflant dans une extrudeuse, le polyuréthane imprégné étant découpé en un granulat et le granulat étant détendu directement après la découpe en particules de polyuréthane thermoplastique expansé ou le polyuréthane préparé dans l'étape (a) étant découpé en un granulat, le granulat étant imprégné dans une cuve ou un autoclave par 0,1 à 40% en poids d'un agent gonflant à une température dans la plage de 100 à 180°C et à une pression dans la plage de 5 à 100 bars et le granulat contenant l'agent gonflant étant ensuite moussé par détente.

10. Procédé selon la revendication 9, **caractérisé en ce que** la préparation du polyuréthane dans l'étape (a) est réalisée dans une première extrudeuse ou une première partie d'extrudeuse et l'imprégnation de la masse fondue est réalisée dans une deuxième extrudeuse ou une deuxième partie d'extrudeuse, le polyuréthane imprégné est découpé en un granulat et le granulat est détendu directement après la découpe en particules de polyuréthane thermoplastique expansé.

11. Procédé de préparation d'un corps moulé à partir de particules de polyuréthane thermoplastique expansé selon l'une des revendications 1 à 8, comprenant les étapes suivantes :

(a) introduction des particules de polyuréthane thermoplastique expansé dans un outil de moulage ;
(b) sollicitation des particules de polyuréthane thermoplastique expansé par de la vapeur d'eau, de l'air chaud ou un rayonnement riche en énergie, de telle sorte que les particules de polyuréthane thermoplastique expansé fondent en surface et fusionnent en une pièce moulée.

12. Procédé selon la revendication 11, **caractérisé en ce que** la pièce moulée est une semelle, un tapis de gymnastique, un dispositif de protection corporelle, un élément de revêtement dans la construction des voitures, un amortisseur de bruit, un amortisseur de vibrations, un rembourrage, une selle de bicyclette, un jouet, un pneu ou une partie de pneu ou un revêtement pour une piste d'athlétisme, un hall de sport ou une allée, une couche d'amortissement ou un noyau d'amortissement dans un élément sandwich ou un emballage.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007118827 A
- US 20120083187 A
- US 20100152405 A
- DE 102006021734 A
- US 20090104449 A
- WO 20071188727 A
- WO 2007082838 A
- WO 2013153153 A
- WO 2013153190 A
- WO 2015052265 A
- WO 2015055811 A

**In der Beschreibung aufgeführte Nicht-Patentliteratur**

- Polyurethane. **GERHARD W. BECKER** ; **DIETRICH BRAUN**. Kunststoffhandbuch. Carl Hanser Verlag, 1993, vol. 7
- Polyurethane. **GERHARD. W. BECKER** ; **DIETRICH BRAUN**. Kunststoffhandbuch. Carl Hanser Verlag, 1993, vol. 7